(19) Europäisches Patentamt
European Patent Office
Office européen des brevets

(11) **EP 4 535 647 A1**

(12) **EUROPEAN PATENT APPLICATION**
published in accordance with Art. 153(4) EPC

(43) Date of publication:
**09.04.2025  Bulletin 2025/15**

(21) Application number: **22943804.9**

(22) Date of filing: **27.05.2022**

(51) International Patent Classification (IPC):
**H02P 21/18** *(2016.01)*

(52) Cooperative Patent Classification (CPC):
**H02P 21/18**

(86) International application number:
**PCT/JP2022/021734**

(87) International publication number:
**WO 2023/228404 (30.11.2023 Gazette 2023/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **TAMARU, Tomohiro**
**Tokyo 100-8310 (JP)**

• **NISHIMURA, Yuki**
**Tokyo 100-8310 (JP)**
• **NAKAGAWA, Akira**
**Tokyo 100-8310 (JP)**
• **ORII, Masahiko**
**Tokyo 100-8310 (JP)**
• **MORI, Tatsuya**
**Tokyo 100-8310 (JP)**
• **FUJIMOTO, Chiaki**
**Tokyo 100-8310 (JP)**

(74) Representative: **Hoffmann Eitle**
**Patent- und Rechtsanwälte PartmbB**
**Arabellastraße 30**
**81925 München (DE)**

(54) **ROTATING ELECTRICAL MACHINE CONTROL DEVICE**

(57)     A rotating electrical machine control device includes a rotating electric machine, an electric power converter, an electric current detector, a rotation sensor, a rotation calculator, a d-axis electric current command value generator, a q-axis electric current command value generator, a voltage command value calculator, and a switching controller. The rotating electric machine has a value of d-axis inductance Ld larger than a value of q-axis inductance Lq. The rotation calculator reduces an angle error due to a detection error of the rotation sensor based on one or more of the output signal of the rotation sensor, the electric current, and the voltage command value.

FIG. 1

EP 4 535 647 A1

## Description

[Technical Field]

The present disclosure relates to a rotating electrical machine control device.

[Background Art]

Conventionally, a rotating electric machine called a permanent magnet synchronous motor or a brushless motor is known. In this rotating electric machine, a permanent magnet is used for a rotor and a winding is wound around a stator. An alternating current (AC) flowing through the winding leads to the generation of torque in the rotor, resulting in the rotation of the rotor. In this rotating electric machine, an induced voltage, which is a voltage induced in the winding, increases as a rotational velocity of the rotor increases.

As disclosed in Patent Document 1, in order to reduce the induced voltage, control for applying an electric current in a direction in which a magnetic flux of the magnet of the rotor is reduced, i.e., magnetic flux weakening control, is generally performed.

In order to obtain high power in this magnetic flux weakening control, it is important to increase inductance Ld in a d-axis direction corresponding to the direction of the magnetic flux of the magnet of the rotor within the inductance of the rotating electric machine. In the case of a rotating electric machine having large inductance Ld, it is possible to perform magnetic flux weakening control more efficiently and it is possible to implement a rotating electric machine capable of obtaining high power.

[Citation List]

[Patent Document]

[Patent Document 1]
Japanese Patent No. 6987318

[Summary of Invention]

[PROBLEM TO BE SOLVED BY THE INVENTION]

Meanwhile, a rotation angle detector is required to control a rotating electric machine disclosed in Patent Document 1. The rotation angle detector detects an angle at which a magnetic pole of a rotor is located with respect to a reference angle, i.e., a rotation angle of the rotor. The rotation angle output by the rotation angle detector includes an angle error corresponding to an error with respect to a true value of the rotation angle of the rotating electric machine. An AC component included in the angle error causes an error in the AC component of the torque, which is called a torque pulsation error, and is a cause of vibration or noise occurring in the rotating electric machine.

Therefore, in the rotating electric machine disclosed in Patent Document 1, even if a rotating electric machine capable of obtaining high power can be realized in effective magnetic flux weakening control, there is a problem that the vibration or noise occurring in the rotating electric machine increases due to the AC component of the angle error.

In other words, in this rotating electric machine, it is necessary to select whether to allow deterioration in vibration or noise by prioritizing high power or to prioritize suppression of deterioration in vibration or noise even though high power cannot be obtained.

The present disclosure has been made to solve the above-described problems and an objective of the present disclosure is to provide a rotating electrical machine control device capable of implementing a high-power rotating electric machine while suppressing the occurrence of vibration or noise.

[MEANS TO SOLVE THE PROBLEM]

A rotating electrical machine control device according to the present disclosure includes: a rotating electric machine including a stator that includes a plurality of phase windings and a rotor that is arranged in a radial direction of the stator and includes a magnet; an electric power converter configured to convert a voltage of a direct current power supply into an alternating current voltage; an electric current detector configured to detect electric currents flowing through the plurality of phase windings based on an output signal output from an electric current sensor; a rotation sensor configured to output an output signal corresponding to a rotation angle of the rotor; a rotation calculator configured to calculate a control rotation angle of the rotor; a d-axis electric current command value generator configured to generate a command value of a d-axis electric current flowing through the rotating electric machine, wherein a direction of a magnetic flux of the magnet is defined as a d-axis and a direction in which an electrical angle is advanced by 90 degrees as compared with that of the d-axis is defined as a q-axis, a q-axis electric current command value generator configured to generate a command value of a q-axis electric current flowing through the rotating electric machine; a voltage command value calculator configured to calculate voltage command values to be applied to the plurality of phase windings based on the control rotation angle, the electric current, the command value of the q-axis electric current, and the command value of the d-axis electric current; and a switching controller configured to drive a process of turning on or off a plurality of switching elements provided in the electric power converter based on the voltage command value. The rotating electric machine has a value of d-axis inductance Ld larger than a value of q-axis inductance Lq. The rotation calculator reduces an angle error due to a detection error of the rotation sensor based on one or more of the output signal of the rotation sensor, the electric current, and the voltage command value.

[EFFECTS OF THE INVENTION]

According to the rotating electrical machine control device of the present disclosure, it is possible to achieve a high-power rotating electric machine while suppressing the occurrence of vibration or noise.

[Brief Description of Drawings]

FIG. 1 is a schematic configuration diagram showing an overall configuration of an electric power steering device including a rotating electrical machine control device according to a first embodiment.
FIG. 2 is a block diagram showing the rotating electrical machine control device according to the first embodiment.
FIG. 3 is a block diagram showing the rotating electrical machine control device according to the first embodiment.
FIG. 4 is a diagram showing each control execution area when Id = 0 control and magnetic flux weakening control are performed if the rotating electrical machine control device according to the first embodiment is applied to a surface magnet type rotating electric machine.
FIG. 5 is a diagram showing each control execution area when maximum torque current control and magnetic flux weakening control are performed if the rotating electrical machine control device according to the first embodiment is applied to an embedded magnet type rotating electric machine.
FIG. 6 is a block diagram showing a control angle calculator according to the first embodiment.
FIG. 7 is an explanatory diagram showing the setting of an internal division ratio according to the first embodiment.
FIG. 8 is a Bode plot diagram showing a transfer function according to the first embodiment.
FIG. 9 is a block diagram showing a control angle calculator according to a second embodiment.
FIG. 10 is a block diagram showing a rotation sensor and a rotation detector according to a third embodiment.
FIG. 11A is an explanatory diagram showing a calculation process of the rotation detector according to the third embodiment.
FIG. 11B is an explanatory diagram showing a calculation process of the rotation detector according to the third embodiment.
FIG. 12A is an explanatory diagram showing a calculation process of the rotation detector according to the third embodiment.
FIG. 12B is an explanatory diagram showing a calculation process of the rotation detector according to the third embodiment.
FIG. 13A an explanatory diagram showing a calculation process of the rotation detector according to the third embodiment.
FIG. 13B is an explanatory diagram showing a calculation process of the rotation detector according to the third embodiment.
FIG. 14A is an explanatory diagram showing a calculation process of the rotation detector according to the third embodiment.
FIG. 14B is an explanatory diagram showing a calculation process of the rotation detector according to the third embodiment.
FIG. 15A is an explanatory diagram showing a calculation process of the rotation detector according to the third embodiment.
FIG. 15B is an explanatory diagram showing a calculation process of the rotation detector according to the third embodiment.
FIG. 16 is a block diagram showing a rotation sensor and a rotation detector according to a fourth embodiment.
FIG. 17A is an explanatory diagram showing a calculation process of the rotation detector according to the fourth embodiment.

FIG. 17B is an explanatory diagram showing a calculation process of the rotation detector according to the fourth embodiment.

FIG. 18A is an explanatory diagram showing a calculation process of the rotation detector according to the fourth embodiment.

FIG. 18B is an explanatory diagram showing a calculation process of the rotation detector according to the fourth embodiment.

FIG. 19 is a cross-sectional view showing a rotating electric machine to be controlled by a rotating electrical machine control device according to a fifth embodiment and is a view viewed in an axial direction.

FIG. 20 is a schematic configuration diagram showing an overall configuration of an electric power steering device including a rotating electrical machine control device according to a sixth embodiment.

FIG. 21 is an explanatory diagram showing a circuit configuration of a DC-DC converter according to the sixth embodiment.

FIG. 22 is an explanatory diagram showing a switching operation in the DC-DC converter according to the sixth embodiment.

FIG. 23 is a circuit diagram showing a part of the DC-DC converter according to a modified example of the sixth embodiment.

[Description of Embodiments]

First Embodiment

A rotating electrical machine control device 10 according to a first embodiment will be described with reference to the drawings.

In the following description, the rotating electrical machine control device 10 may be simply referred to as a control device 10.

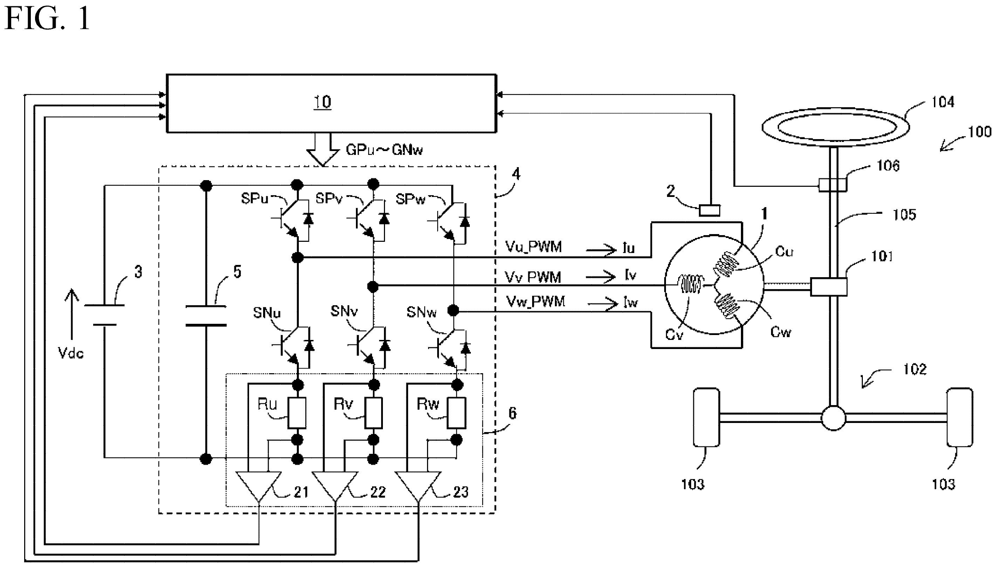

FIG. 1 is a schematic configuration diagram showing an overall configuration of an electric power steering device 100 including the rotating electrical machine control device 10 according to the first embodiment. In the present embodiment, the rotating electric machine 1 is a driving force source of the electric power steering device 100. The rotating electric machine 1, an electric power converter 4, and a control device 10 constitute the electric power steering device 100. The electric power steering device 100 is provided in a vehicle.

<Rotating electric machine 1>

The rotating electric machine 1 includes a stator and a rotor arranged in a radial direction of the stator. The stator is arranged to surround an outer circumference of the rotor via an air gap that serves as a magnetic gap.

<Stator>

The stator has a stator core and windings. The windings are coils corresponding to a plurality of phases. The rotating electric machine 1 according to the present embodiment is driven by three-phase alternating current (AC) currents having a U-phase, a V-phase, and a W-phase. The windings include windings Cu, Cv, and Cw corresponding to the U-phase, the V-phase, and the W-phase. In FIG. 1, electric currents flowing through the windings Cu, Cv, and Cw are denoted by reference signs Iu, Iv, and Iw. Hereinafter, description will be given with respect to only one of three phases, i.e., the U-phase, the V-phase, and the W-phase, and redundant description will be omitted with respect to the other two phases.

<Rotor>

The rotor includes a rotor core, a rotating shaft, and a plurality of magnets. The rotor core includes, for example, a plurality of electrical steel plates stacked in a direction in which the rotating shaft extends. The rotating shaft is fixed to a central portion of the rotor core. A plurality of magnets are fixed to an outer circumferential surface of the rotor core. A change in a magnetic field generated between the plurality of magnets and the stator causes the rotor to rotate and causes the rotating shaft to rotate.

The rotor includes a rotation sensor 2 for detecting the rotation angle of the rotor. The rotation sensor 2 is configured to output an output signal corresponding to the rotation angle of the rotor. As the rotation sensor 2, for example, a resolver, an encoder, a magnetoresistive (MR) sensor, or the like is used. The output signal output from the rotation sensor 2 is input to a control device 10.

The magnet is, for example, a permanent magnet. Therefore, the rotating electric machine 1 constitutes a permanent magnet synchronous motor. In the rotating electric machine 1, d-axis inductance Ld and q-axis inductance Lq have a relationship of Ld > Lq. That is, a value of the d-axis inductance Ld is larger than a value of the q-axis inductance Lq. In other words, the rotating electric machine 1 is a forward salient pole motor.

In addition, the configuration of the rotating electric machine 1 is not limited to the permanent magnet synchronous motor. The magnet may be an electromagnet having a magnetic field winding. The three-phase windings Cu, Cv, and Cw may be star connected or delta connected.

<Electric power converter 4>

The electric power converter 4 is, for example, an inverter. In other words, the electric power converter 4 is configured to convert a voltage of a DC power supply 3 into an AC voltage. The electric power converter 4 includes three series circuits corresponding to three-phase AC currents having a U-phase, a V-phase, and a W-phase, a smoothing capacitor 5, and an electric current sensor 6. In other words, the series circuit is a leg.

<Switching element>

In each of the series circuits, a switching element SP and a switching element SN are connected in series. The switching element SP is a positive-electrode-side switching element connected to a positive electrode side of the DC power supply 3. The switching element SN is a negative-electrode-side switching element connected to a negative electrode side of the DC power supply 3.

As the switching element, an insulated gate bipolar transistor (IGBT) in which diodes are connected in antiparallel, a metal oxide semiconductor field effect transistor (MOSFET), a bipolar transistor in which diodes are connected in antiparallel, or the like is used. A gate terminal of each switching element is connected to the control device 10 via a gate drive circuit or the like. The switching elements are turned on or off according to switching signals GPu to GNw output from the control device 10.

Although reference signs SPu, SPv, and SPw representing the switching elements SP and reference signs SNu, SNv, and SNw representing switching elements SN are shown in FIG. 1, small letters u, v, and w are shown in correspondence with the three-phase AC currents having the U-phase, the V-phase, and the W-phase, respectively. When each of the three phases is not distinguished, the switching element may be simply referred to as a switching element SP or a switching element SN.

The connection points between the two switching elements SP and SN in the series circuits for the three phases, i.e., the U-phase, the V-phase, and the W-phase, are connected one-to-one to the corresponding windings Cu, Cv, and Cw.

Specifically, in the U-phase series circuit, the positive-electrode-side switching element SPu for the U-phase and the negative-electrode-side switching element SNu for the U-phase are connected in series. A connection point between the two switching elements SPu and SNu is connected to the U-phase winding Cu.

In the V-phase series circuit, the positive-electrode-side switching element SPv for the V-phase and the negative-electrode-side switching element SNv for the V-phase are connected in series. A connection point between the two switching elements SPv and SNv is connected to the V-phase winding Cv.

In the W-phase series circuit, the positive-electrode-side switching element SPw for the W-phase and the negative-electrode-side switching element SNw for the W-phase are connected in series. A connection point between the two switching elements SPw and SNw is connected to the W-phase winding Cw.

<Smoothing capacitor 5 and DC power supply 3>

The smoothing capacitor 5 is connected between a positive electrode side and a negative electrode side of the DC power supply 3.

The DC power supply 3 outputs a DC voltage Vdc to the electric power converter 4. In the present embodiment, the DC voltage Vdc is, for example, 12 V. The DC power supply 3 is, for example, a battery, a DC-DC converter, a diode rectifier, a pulse width modulation (PWM) rectifier, or the like. As long as a device can output a DC voltage Vdc, a type of device constituting the DC power supply 3 is not limited. A voltage sensor that detects the DC voltage Vdc may be provided in the DC power supply 3. An output signal output from the voltage sensor may be input to the control device 10. The control device 10 may perform control using the detected DC voltage Vdc.

<Current sensor 6>

The electric current sensor 6 is configured to detect an electric current flowing through each of three-phase windings having the U-phase, the V-phase, and the W-phase. The electric current sensor 6 is, for example, a current sensor such as a shunt resistor or a Hall element. An output signal output from the electric current sensor 6 is input to the control device 10.

In the present embodiment, the electric current sensor 6 is connected in series to the switching elements SPw and SNw in the series circuits having the three phases, i.e., the U-phase, the V-phase, and the W-phase.

The electric current sensor 6 has a U-phase resistor Ru, a V-phase resistor Rv, and a W-phase resistor Rw. The three-phase resistors Ru, Rv, and Rw are connected in series to the negative electrode sides of the switching elements SNu, SNv, and SNw, respectively.

The three-phase resistors Ru, Rv, and Rw are connected one-to-one to the amplifiers 21, 22, and 23. The amplifiers 21, 22, and 23 detect potential differences between both ends of the three-phase resistors Ru, Rv, and Rw, respectively. The detected potential differences are input to the control device 10.

In addition, for each of the three phases, i.e., the U-phase, the V-phase, and the W-phase, the electric current sensor 6 may be provided on an electric wire connecting the series circuit and the winding for the two switching elements SP and SN.

Moreover, the electric current sensor 6 may be provided on an electric wire connected to the electric power converter 4 and the DC power supply 3. In this case, the electric current of the winding for each of the three phases, i.e., the U-phase, the V-phase, and the W-phase, may be detected in a known "single busbar shunt method".

The configuration of the electric power converter 4 is not limited to the inverter. An electric power converter other than an inverter, for example, a matrix converter, may be used in the electric power converter 4.

<Electric power steering device 100>

The electric power steering device 100 includes the above-described rotating electrical machine control device 10, the above-described electric power converter 4, the above-described rotating electric machine 1, a driving force transmission mechanism 101, a steering device 102, vehicle wheels 103, a steering wheel 104, a shaft 105, and a torque sensor 106.

The driving force transmission mechanism 101 is a mechanism for transmitting a driving force generated from the rotating electric machine 1 to the steering device 102 of the vehicle. The driving force transmission mechanism 101 includes a worm gear mechanism that connects a rotating shaft of the rotating electric machine 1 to the shaft 105 or the like.

The steering wheel 104 is operated by a driver who drives a vehicle and can be rotated left or right. The rotating shaft of the rotor constituting the rotating electric machine 1 is connected to the steering device 102 for the vehicle wheels 103 via the driving force transmission mechanism 101.

The shaft 105 is connected to the steering wheel 104. The shaft 105 transmits steering torque from the steering wheel 104 to the steering device 102 connected to the vehicle wheels 103.

The torque sensor 106 is attached to the shaft 105. The torque sensor 106 detects steering torque Ts from the steering wheel 104. An output signal output from the torque sensor 106 is input to the control device 10. The output signal output from the torque sensor 106, for example, is input to an input circuit 92 to be described below.

<Control device 10>

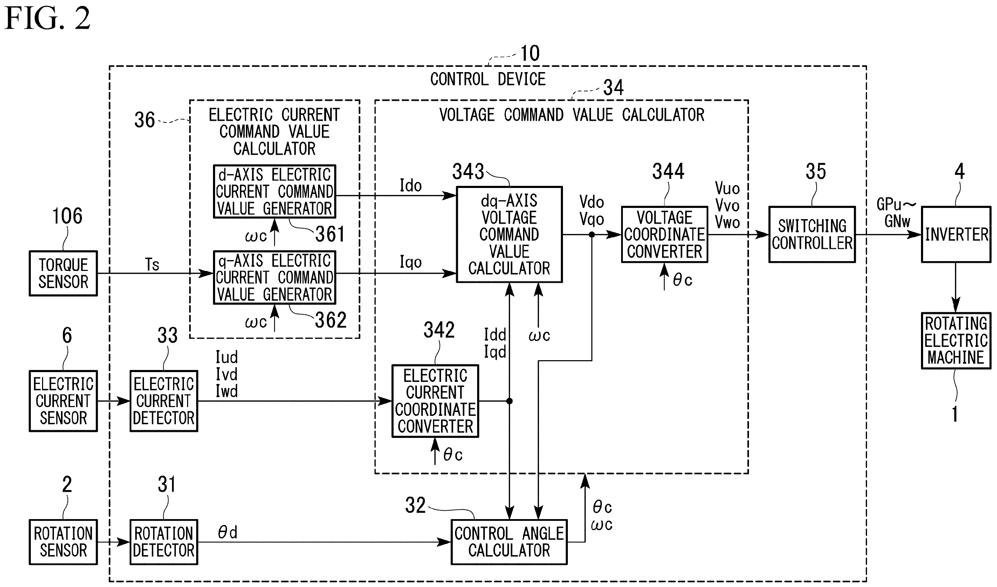

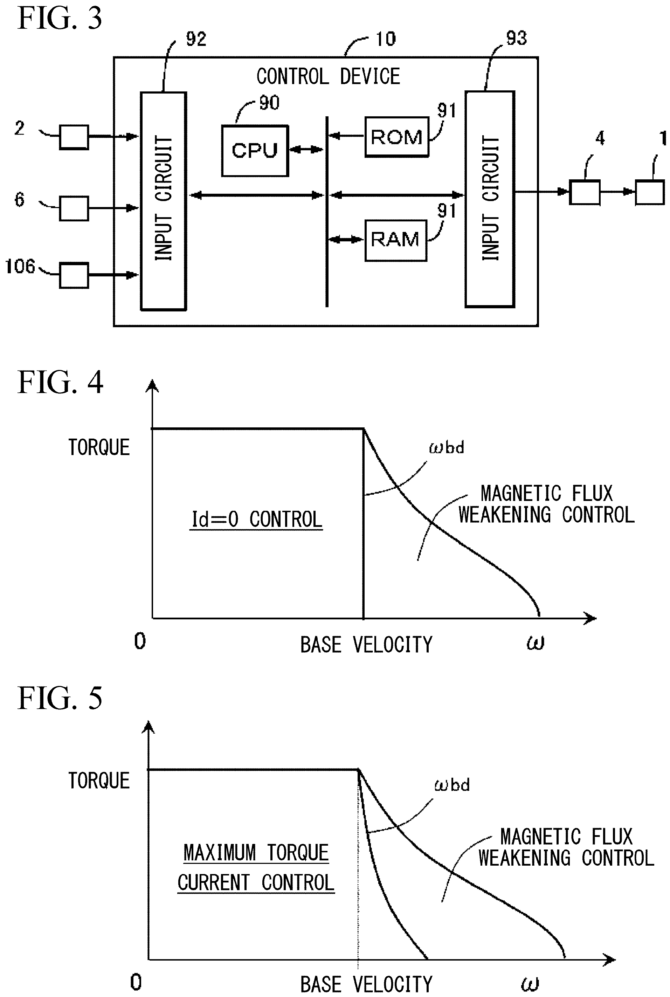

FIGS. 2 and 3 are block diagrams showing the control device 10 according to the present embodiment.

The control device 10 is configured to control the rotating electric machine 1 via the electric power converter 4.

As shown in FIG. 2, the control device 10 includes a rotation detector 31, a control angle calculator 32, an electric current detector 33, a voltage command value calculator 34, a switching controller 35, or the like.

Each function of the control device 10 is realized by a processing circuit included in the control device 10.

In the following description, the rotation detector 31, the control angle calculator 32, the electric current detector 33, the voltage command value calculator 34, and the switching controller 35 may be referred to as controllers 31 to 35. Moreover, the controllers 31 to 35 may be referred to as functional portions.

The control device 10 includes a plurality of processing circuits. Specifically, as shown in FIG. 3, the control device 10 includes a CPU (central processing unit) 90, a storage device 91, an input circuit 92, an output circuit 93, or the like.

<CPU 90>

The CPU 90 is an example of a calculation processing device. It is a CPU or the like in a computer.

The CPU 90 may include, for example, an application specific integrated circuit (ASIC), an integrated circuit (IC), a digital signal processor (DSP), a field programmable gate array (FPGA), various types of logic circuits, various types of signal processing circuits, or the like. The CPU 90 is configured to execute software stored in the storage device 91. Here, the software is, for example, a computer program. The CPU 90 may include a plurality of circuits, such as the same type of circuits or different types of circuits. A process of the CPU 90 may be executed such that the process to be performed by the CPU 90 is partially shared with the plurality of circuits.

<Storage device 91>

The storage device 91 stores a computer program, various types of data, or the like. In other words, the storage device 91 is capable of storing software.

The storage device 91 includes a random-access memory (RAM), a read-only memory (ROM), or the like.

When the storage device 91 includes the RAM, the storage device 91 can read and write data from the CPU 90. When the storage device 91 includes the ROM, the storage device 91 can read data from the CPU 90.

The storage device 91 exchanges data between the CPU 90 and storage device 91.

<Input circuit 92>

The input circuit 92 is a circuit for inputting an external signal from outside the control device 10 to the CPU 90. The input circuit 92 is connected to various types of sensors such as the rotation sensor 2, the electric current sensor 6, and the torque sensor 106 or switches. The input circuit 92 includes an analog-to-digital (A/D) converter or the like. Therefore, the input circuit 92 inputs an output signal output from the above-described sensor or switch to the CPU 90.

<Output circuit 93>

The output circuit 93 is a circuit that outputs a signal from the CPU 90 to outside of the control device 10. An electrical load is connected to the output circuit 93. The electrical load is, for example, a gate drive circuit or the like. The gate drive circuit drives a switching element such that the state of the switching element is switched to an ON state or an OFF state. The output circuit 93 includes, for example, a drive circuit or the like. The drive circuit outputs a control signal from the CPU 90 to the electrical load.

In the following description, driving the switching element such that the state of the switching element is switched to the ON state or the OFF state may be referred to as "turning on or off the switching element".

When the software is executed by the CPU 90 in the control device 10 configured as described above, the storage device 91, the input circuit 92, the output circuit 93, are the like are driven in cooperation with other hardware or sensors connected to the control device 10. Therefore, functions of the controllers 31 to 35 are realized.

In addition, setting data such as an internal division ratio and a control gain used by the controllers 31 to 35 is stored as a part of the software in the storage device 91 such as the ROM.

Hereinafter, each function of the control device 10 will be described in detail with reference to FIGS. 2 to 8.

<Basic control in control device 10>

<Rotation detector 31>

The rotation detector 31 detects a rotation angle $\theta d$ of the rotor based on an output signal output from the rotation sensor 2. Specifically, the rotation detector 31 detects a rotation angle (magnetic pole position) of a magnetic pole (N-pole) of a magnet at an electrical angle for a position of the U-phase winding Cv. The detected rotation angle is a detected value $\theta d$ which is the rotation angle of the rotor.

<Electric current detector 33>

The electric current detector 33 detects electric currents Iud, Ivd, and Iwd flowing through the three-phase windings based on the output signal output from the electric current sensor 6. Specifically, based on the output signal output from the electric current sensor 6, the electric current detector 33 detects the electric current Iud flowing through the U-phase winding Cu, detects the electric current Ivd flowing through the V-phase winding Cv, and detects the electric current Iwd flowing through the W-phase winding Cw.

In addition, the electric current sensor 6 may be configured to detect electric currents of the two-phase windings in relation to the electric current detection process of the electric current detector 33. An electric current of the remaining phase winding may be calculated based on detected values of the electric currents of the two-phase windings. For example, the electric current sensor 6 detects the V- and W-phase winding currents Ivd and Iwd. The U-phase winding current Iud may be calculated by Iud = -Ivd-Iwd.

<Voltage command value calculator 34>

The voltage command value calculator 34 calculates three-phase voltage command values Vuo, Vvo, and Vwo applied to the three-phase windings Cu, Cv, and Cw based on a control rotation angle $\theta c$ calculated by the control angle calculator 32 to be described below and the electric current detection value.

Specifically, the voltage command value calculator 34 calculates voltage command values applied to the plurality of phase windings based on a control rotation angle, an electric current, a q-axis electric current command value, and a d-axis electric current command value.

In the present embodiment, the voltage command value calculator 34 includes an electric current coordinate converter 342, a dq-axis voltage command value calculator 343, and a voltage coordinate converter 344.

The electric current coordinate converter 342 converts the electric current detection values Iud, Ivd, and Iwd of the three-phase windings Cu, Cv, and Cw into a d-axis electric current detection value Idd and a q-axis electric current detection value Iqd based on the control rotation angle θc.

In the present embodiment, the electric current coordinate converter 342 performs a three-phase/two-phase conversion process and a rotational coordinate conversion process for the electric current detection values Iud, Ivd, and Iwd of the three-phase windings Cu, Cv, and Cw based on the control rotation angle θc as shown in the following equation. Therefore, the electric current detection values Iud, Ivd, and Iwd are converted into the d-axis electric current detection value Idd and the q-axis electric current detection value Iqd.

[Math. 1]

$$\begin{bmatrix} Idd \\ Iqd \end{bmatrix} = \sqrt{\frac{2}{3}} \begin{bmatrix} \cos\theta c & \cos\left(\theta c - \frac{2\pi}{3}\right) & \cos\left(\theta c + \frac{2\pi}{3}\right) \\ -\sin\theta c & -\sin\left(\theta c - \frac{2\pi}{3}\right) & -\sin\left(\theta c + \frac{2\pi}{3}\right) \end{bmatrix} \begin{bmatrix} Iud \\ Ivd \\ Iwd \end{bmatrix} \qquad (1\text{-}1)$$

In addition, the d-axis is defined in a direction of the magnetic pole (N-pole) of the magnet. The q-axis is defined in a direction in which an electrical angle is advanced by 90 degrees as compared with that of the d-axis.

In the present embodiment, the coordinate conversion process is performed based on the control rotation angle θc. For this reason, the direction of the control rotation angle θc is defined as the d-axis.

<Current command value calculator 36>

The electric current command value calculator 36 includes a d-axis electric current command value generator 361 and a q-axis electric current command value generator 362. The d-axis electric current command value generator 361 calculates a d-axis electric current command value Ido. In other words, the d-axis electric current command value generator 361 generates a command value of a d-axis electric current flowing through the rotating electric machine. The q-axis electric current command value generator 362 calculates a q-axis electric current command value Iqo. In other words, the q-axis electric current command value generator 362 generates a command value of the q-axis electric current flowing through the rotating electric machine. The electric current command value calculator 36 detects the steering torque Ts generated in the steering wheel 104 manipulated by the driver based on the output signal output from the torque sensor 106.

Also, as shown in the following equation, the electric current command value calculator 36 sets the q-axis electric current command value Iqo based on the steering torque Ts and sets the d-axis electric current command value Ido to 0. That is, Id = 0 control is performed. The Id = 0 control is an example of the d-axis electric current zero control. In the Id = 0 control, the d-axis electric current command value Ido is set to 0. When the rotating electric machine 1 is a surface magnet type rotating electric machine, the Id = 0 control is preferable.

$$Iqo = Ka \times Ts \quad Ido = 0 \qquad (1\text{-}2)$$

Here, Ka is a constant. In addition, Ka may be changed with the steering torque Ts and a traveling speed of the vehicle. Moreover, the q-axis electric current command value Iqo may be set based on known compensation control corresponding to a steering situation.

In addition, when the rotating electric machine 1 is an embedded magnet type rotating electric machine, the d- and q-axis electric current command values Ido and Iqo may be set according to the maximum torque current control instead of the Id = 0 control. In the maximum torque current control, the d- and q-axis electric current command values Ido and Iqo are calculated such that the generated torque is maximized for the same electric current.

In an area where the rotational angular velocity is high, magnetic flux weakening control is performed to increase the d-axis electric current command value Ido in a negative direction as compared with the d-axis electric current command value calculated in the Id = 0 control or the maximum torque current control.

For example, an area where the magnetic flux weakening control is executed is set to an area where a rotational angular velocity ω is greater than or equal to a base velocity at which an amplitude of a line voltage output by the inverter reaches the DC voltage Vdc.

FIG. 4 is a diagram showing each control execution area when the Id = 0 control and the magnetic flux weakening control are performed if the control device 10 is applied to the surface magnet type rotating electric machine.

FIG. 5 is a diagram showing each control execution area when the maximum torque current control and the magnetic flux weakening control are performed if the control device 10 is applied to the embedded magnet type rotating electric machine.

In FIGS. 4 and 5, the horizontal axis represents a rotational angular velocity and the vertical axis represents torque.

The dq-axis voltage command value calculator 343 performs electric current feedback control shown in the following equation. Specifically, in the electric current feedback control, the dq-axis voltage command value calculator 343 changes a d-axis voltage command value Vdo and a q-axis voltage command value Vqo such that the d-axis electric current detection value Idd is close to the d-axis electric current command value Ido and such that the q-axis electric current detection value Iqd is close to the q-axis electric current command value Iqo. In the electric current feedback control, for example, proportional integration (PI) control or the like is used.

[Math. 2]

$$Vdo = Kd\left(1 + \frac{1}{Td \times s}\right)(Ido - Idd)$$
$$Vqo = Kq\left(1 + \frac{1}{Tq \times s}\right)(Iqo - Iqd)$$

$$(1\text{-}3)$$

Here, Kd and Kq denote proportional gains. Td and Tq denote integral time constants. s denotes a Laplace operator. In addition, feedforward control may be performed for non-interference of the d-axis electric current and the q-axis electric current.

That is, "-ωc×Lq×Iqc" may be added to the d-axis voltage command value Vdo. Moreover, "ωc×(Ld×Idc+ψ)" may be added to the q-axis voltage command value Vqo.

Here, ωc is a rotational angular velocity for control to be described below. Instead of ωc, a detected value ωd of the rotational angular velocity to be described below may be used.

Lq denotes q-axis inductance. Ld denotes d-axis inductance. ψ denotes magnetic flux linkage in which the magnetomotive force of the magnet is interlinked with the winding.

The voltage coordinate converter 344 converts the d-axis voltage command value Vdo and the q-axis voltage command value Vqo into three-phase voltage command values Vuo, Vvo, and Vwo based on the control rotation angle θc.

In the present embodiment, as shown in the following equation, the voltage coordinate converter 344 performs a fixed coordinate conversion process and a two-phase/three-phase conversion process based on a control rotation angle θc with respect to the d-axis voltage command value Vdo and the q-axis voltage command value Vqo. Therefore, the voltage coordinate converter 344 converts the d-axis voltage command value Vdo and the q-axis voltage command value Vqo into the three-phase voltage command values Vuo, Vvo, and Vwo.

[Math. 3]

$$\begin{bmatrix} Vuo \\ Vvo \\ Vwo \end{bmatrix} = \sqrt{\frac{2}{3}} \begin{bmatrix} \cos\theta c & -\sin\theta c \\ \cos\left(\theta c - \frac{2\pi}{3}\right) & -\sin\left(\theta c - \frac{2\pi}{3}\right) \\ \cos\left(\theta c + \frac{2\pi}{3}\right) & -\sin\left(\theta c + \frac{2\pi}{3}\right) \end{bmatrix} \begin{bmatrix} Vdo \\ Vqo \end{bmatrix} \qquad (1\text{-}4)$$

In addition, the voltage coordinate converter 344 may apply known modulation such as two-phase modulation or third-order harmonic superimposition to the three-phase voltage command values Vuo, Vvo, and Vwo.

<Switching controller 35>

The switching controller 35 turns on or off a plurality of switching elements provided in the electric power converter 4 based on the three-phase voltage command values Vuo, Vvo, and Vwo. The switching controller 35 uses known carrier comparison PWM or space vector PWM.

The switching controller 35 turns on or off a plurality of switching elements SP and SN provided in the electric power converter 4 based on the voltage command value calculated by the voltage command value calculator 34.

When the carrier comparison PWM is used, the switching controller 35 compares a carrier wave with the three-phase voltage command values Vuo, Vvo, and Vwo. The switching controller 35 turns on or off a plurality of switching elements based on a comparison result.

The carrier wave is, for example, a triangular wave. Here, the triangular wave has a waveform that oscillates at an amplitude of Vdc/2 that is half a DC voltage centered on 0 at a PWM cycle Tc.

For the positive-electrode-side switching element SP for each of the three phases, i.e., the U-phase, the V-phase, and the W-phase, the switching controller 35 controls the operation as follows.

When the carrier wave falls below the voltage command value, the switching controller 35 turns on a switching signal GP of the positive-electrode-side switching element SP and turns on the positive-electrode-side switching element SP.

When the carrier wave exceeds the voltage command value, the switching controller 35 turns off the switching signal GP of the positive-electrode-side switching element SP and turns off the positive-electrode-side switching element SP.

For the negative-electrode-side switching element SN for each of the three phases, i.e., the U-phase, the V-phase, and the W-phase, the switching controller 35 controls the operation as follows.

When the carrier wave falls below the voltage command value, the switching controller 35 turns off a switching signal GN of the negative-electrode-side switching element SN and turns off the negative-electrode-side switching element SN.

When the carrier wave exceeds the voltage command value, the switching controller 35 turns on the switching signal GN of the negative-electrode-side switching element SN and turns on the negative-electrode-side switching element SN.

In addition, a short-circuit prevention period may be provided between an ON period of the positive-electrode-side switching element SP and an ON period of the negative-electrode-side switching element SN for each of the three phases, i.e., the U-phase, the V-phase, and the W-phase. The short-circuit prevention period is the so-called dead time. During the short-circuit prevention period, both the positive-electrode-side switching element SP and the negative-electrode-side switching element SN are turned off.

When the space vector PWM is used, the switching controller 35 generates a voltage command vector from the three-phase voltage command values Vuo, Vvo, and Vwo. Based on the voltage command vector, the switching controller 35 decides an output time distribution of seven basic voltage vectors at the PWM cycle. The switching controller 35 generates a switching signal for turning on or off each switching element at the PWM cycle based on the output time distribution of the seven basic voltage vectors.

<Control angle calculator 32>

The control angle calculator 32 is configured to reduce an angle error due to a detection error of the rotation sensor 2 based on one or more of the rotation angle that is an output signal of the rotation sensor 2, the electric current command value, and the voltage command value. A specific function of the control angle calculator 32 is as follows.

The control angle calculator 32 calculates the control rotation angle $\theta c$ of the rotor. That is, the control angle calculator 32 is an example of a rotation calculator that calculates a control rotation angle of the rotor.

The control angle calculator 32 estimates an estimated actual angle deviation $\Delta\theta e$, which is a deviation of the control rotation angle $\theta c$ from a true value of the rotation angle of the rotor, in accordance with information of the electric current detection value and information of the voltage command value. The control angle calculator 32 calculates a detected angle deviation $\Delta\theta d$, which is a deviation of the control rotation angle $\theta c$ from the detected value $\theta d$ of the rotation angle.

The control angle calculator 32 calculates the detected angle deviation $\Delta\theta d$ as the control angle deviation.

For example, the control angle calculator 32 calculates a value obtained by internally dividing the estimated actual angle deviation $\Delta\theta e$ and the detected angle deviation $\Delta\theta d$ as a control angle deviation $\Delta\theta c$.

Also, the control angle calculator 32 calculates the control rotation angle based on the control angle deviation. Specifically, the control angle calculator 32 calculates the control rotation angle $\theta c$ by performing feedback control such that the control angle deviation $\Delta\theta c$ is close to 0. More specifically, the control angle calculator 32 performs this feedback control to change a rotational angular velocity for control in the rotor, perform an integral of the rotational angular velocity for control, and calculate the control rotation angle.

When a velocity-proportional physical quantity, which is a physical quantity proportional to the rotational angular velocity of the rotor, is greater than a preset velocity threshold value Th, the control angle calculator 32 makes a proportion Ke of the estimated actual angle deviation $\Delta\theta e$ in the control angle deviation $\Delta\theta c$ higher than a proportion Kd of the detected angle deviation.

When the velocity-proportional physical quantity is less than the velocity threshold value Th, the control angle calculator 32 makes the proportion Ke of the estimated actual angle deviation $\Delta\theta e$ in the control angle deviation $\Delta\theta c$ lower than the proportion Kd of the detected angle deviation.

According to this configuration, feedback control is performed such that the control angle deviation $\Delta\theta c$ obtained by internally dividing the estimated actual angle deviation $\Delta\theta e$ and the detected angle deviation $\Delta\theta d$ is close to 0. Therefore, the control rotation angle $\theta c$ is calculated. In other words, the control device 10 according to the present embodiment is not configured to correct a rotational angular velocity value detected by a sensor according to a feedback control value as in the magnetic flux weakening control disclosed in Patent Document 1. In the control device 10 according to the present embodiment, when the rotor is rotating at a high speed, it is not necessary to increase a response frequency of the feedback control to reduce an error of an AC component included in the rotation angle value detected by the sensor.

For this reason, the response frequency of the feedback control can be set to respond to a vibration frequency of the mechanical rotation angle, which is a relatively low frequency. Furthermore, the response frequency of the feedback control can be set not to respond to a frequency of the noise component included in a relatively high-frequency electric current detection value.

Moreover, when the rotor is rotating at a high speed, the proportion Ke of the estimated actual angle deviation $\Delta\theta e$ is made higher than the proportion Kd of the detected angle deviation $\Delta\theta d$ and the control rotation angle $\theta c$ is calculated according to feedback control for making the control angle deviation $\Delta\theta c$ close to 0. For this reason, it is possible to suppress that the error of the AC component included in the detected value $\theta d$ of the rotation angle is reflected in the control rotation angle $\theta c$. Furthermore, the control rotation angle $\theta c$ can be made close to the true value of the rotation angle.

Therefore, when the rotor is rotating at a high speed, it is possible to suppress an increase in the error of the rotation angle due to the high-frequency noise component included in the electric current detection value while reducing the error of the AC component included in the detected value $\theta d$ of the rotation angle.

Moreover, when the rotor is rotating at a low speed, even if the proportion Kd of the detected angle deviation $\Delta\theta d$ is higher than the proportion Ke of the estimated actual angle deviation $\Delta\theta e$, the control rotation angle $\theta c$ is calculated according to feedback control for making the control angle deviation $\Delta\theta c$ close to 0. For this reason, it is possible to suppress that the error of the AC component included in the detected value $\theta d$ of the rotation angle is reflected in the control rotation angle $\theta c$.

<Calculation of detected angle deviation $\Delta\theta d$>

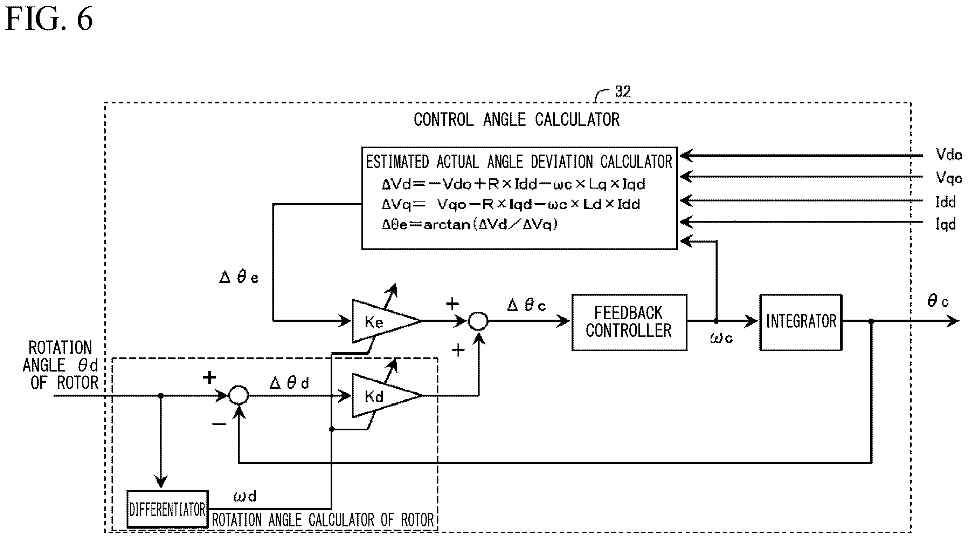

FIG. 6 is a block diagram showing the control angle calculator 32 according to the present embodiment.

As shown in the following equation, the control angle calculator 32 calculates a detected angle deviation $\Delta\theta d$ by subtracting the control rotation angle $\theta c$ from the rotation angle detection value $\theta d$.

$$\Delta\theta d = \theta d - \theta c \qquad (1\text{-}5)$$

<Calculation of estimated actual angle deviation $\Delta\theta e$>

As described above, the control angle calculator 32 estimates the estimated actual angle deviation $\Delta\theta e$, which is a deviation of the control rotation angle $\theta c$ from the true value of the rotation angle of the rotor in accordance with information of the electric current detection value and information of the voltage command value.

In the present embodiment, the control angle calculator 32 estimates the estimated actual angle deviation $\Delta\theta e$, which is the deviation of the control rotation angle $\theta c$ from the true value of the rotation angle of the rotor based on the d-axis electric current detection value Idd, the q-axis electric current detection value Iqd, the d-axis voltage command value Vdo, the q-axis voltage command value Vqo, and the rotational angular velocity $\omega c$ for control.

The control angle calculator 32 calculates the estimated actual angle deviation $\Delta\theta e$ using the following equations.

$$\Delta Vd = -Vdo + R \times Idd - \omega c \times Lq \times Iqd$$

$$\Delta Vq = Vqo - R \times Iqd - \omega c \times Ld \times Idd$$

$$\Delta\theta e = \arctan(\Delta Vd / \Delta Vq) \qquad (1\text{-}6)$$

Here, R denotes a preset winding resistance value. Lq denotes preset q-axis inductance. Ld denotes preset d-axis inductance.

Ld and Lq may be set using map data of a d-axis electric current and a q-axis electric current in consideration of the magnetic saturation of the permanent magnet.

Eqs. (1-6) are equations derived based on a voltage equation. $\Delta Vd$ denotes an error of a d-axis voltage due to a deviation of the control rotation angle θc from an actual rotation angle. Here, the "actual rotation angle" is a rotation angle at which the voltage equation is valid. ΔVq denotes an error of a q-axis voltage due to a deviation of the control rotation angle θc from the actual rotation angle.

Also, the estimated actual angle deviation Δθe, which is the deviation of the control rotation angle θc from the true value of the rotation angle, is calculated by calculating a value of an arctangent function of ΔVd/ΔVq.

In addition, instead of the rotational angular velocity ωc for control, the detected value ωd of the rotational angular velocity calculated by differentiating the rotation angle detection value θd may be used.

Moreover, instead of the d-axis voltage command value Vdo and the q-axis voltage command value Vqo, an applied U-phase voltage Vu_PWM, an applied V-phase voltage Vv_PWM, and an applied W-phase voltage Vw_PWM applied to the three-phase windings may be detected. In this case, a d-axis voltage detection value Vdd and a q-axis voltage detection value Vqd obtained by performing the three-phase/two-phase conversion process and the rotation coordinate conversion process based on the control rotation angle θc with respect to the three-phase voltage detection values Vu_PWM, Vv_PWM, and Vw_PWM may be used.

When an absolute value of the detected value ωd of the rotational angular velocity is smaller than a threshold value, the control angle calculator 32 may stop the estimated actual angle deviation Δθe using Eqs. (1-6) and set Δθe = 0. This is intended to prevent a phenomenon in which the error ΔVq of the q-axis voltage is close to 0, ΔVd/ΔVq becomes excessively large, and the calculation error of Δθe becomes excessively large when the rotational angular velocity is low.

<Calculation of detected value ωd of rotational angular velocity>

The control angle calculator 32 calculates the detected value ωd of the rotational angular velocity using the following equation.

$$\omega d(n) = \{\theta d(n) - \theta d(n-1)\}/\Delta T \qquad (1\text{-}7)$$

Here, θd(n-1) denotes a rotation angle detected at a previous calculation timing. θd(n) denotes a rotation angle detected at this calculation timing. ΔT denotes a calculation cycle.

As the detected value ωd of the rotational angular velocity, a value obtained by performing a low-pass filtering process may be used for a calculated value of Eq. (1-7).

<Calculation of control angle deviation Δθc in internal division process>

As shown in the following equation, the control angle calculator 32 calculates a sum of a value obtained by multiplying the estimated actual angle deviation Δθe by the internal division ratio Ke of the estimated actual angle deviation and a value obtained by multiplying the detected angle deviation Δθd by the internal division ratio Kd of the detected angle deviation. A value of this sum is the control angle deviation Δθc.

Here, the internal division ratio Ke of the estimated actual angle deviation is an example of the proportion of the estimated actual angle deviation. The internal division ratio Kd of the detected angle deviation is an example of the proportion of the detected angle deviation.

$$\Delta\theta c = Ke \times \Delta\theta e + Kd \times \Delta\theta d$$

$$Ke + Kd = 1, \ 0 \le Ke \le 1, \ 0 \le Kd \le 1 \qquad (1\text{-}8)$$

Here, the internal division ratio Ke of the estimated actual angle deviation is the proportion Ke of the estimated actual angle deviation Δθe in the control angle deviation Δθc. The internal division ratio Kd of the detected angle deviation is the proportion Kd of the detected angle deviation Δθd in the control angle deviation Δθc.

The internal division ratio Ke of the estimated actual angle deviation and the internal division ratio Kd of the detected angle deviation are set in a range of 0 or more and 1 or less, respectively, such that the sum of the internal division ratio Ke of the estimated actual angle deviation and the internal division ratio Kd of the detected angle deviation is 1. That is, Kd = 1-Ke.

Therefore, a relationship of (Δθc-Δθe):(Δθd-Δθc) = Ke:(1-Ke) is valid. That is, the control angle deviation Δθc is a value obtained by internally dividing the estimated actual angle deviation Δθe and the detected angle deviation Δθd at a ratio of Ke:(1-Ke).

<Change in internal division ratio corresponding to velocity-proportional physical quantity>

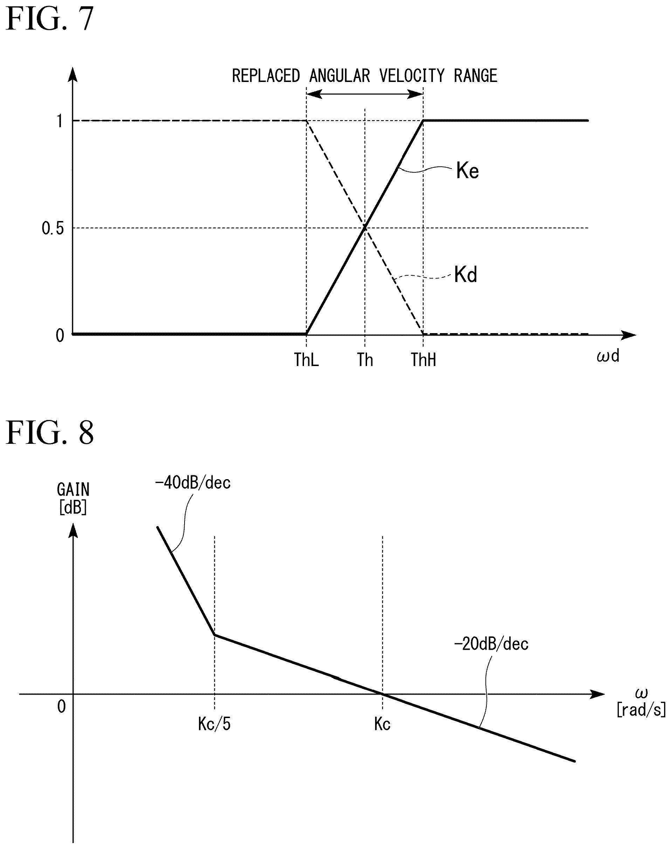

FIG. 7 shows an example in which the internal division ratios Ke and Kd are set according to the present embodiment.

As shown on the horizontal axis of FIG. 7, in the present embodiment, the detected value $\omega$d of the rotational angular velocity is used as a velocity-proportional physical quantity.

When the detected value $\omega$d of the rotational angular velocity is greater than the preset velocity threshold value Th, the control angle calculator 32 makes the internal division ratio Ke of the estimated actual angle deviation higher than the internal division ratio Kd of the detected angle deviation.

When the detected value $\omega$d of the rotational angular velocity is less than the velocity threshold value Th, the control angle calculator 32 makes the internal division ratio Ke of the estimated actual angle deviation lower than the internal division ratio Kd of the detected angle deviation.

That is, when the detected value $\omega$d of the rotational angular velocity is larger than the velocity threshold value Th, the control angle calculator 32 makes the internal division ratio Ke of the estimated actual angle deviation greater than 0.5 and makes the internal division ratio Kd of the detected angle deviation less than 0.5.

Moreover, when the detected value $\omega$d of the rotational angular velocity is smaller than the velocity threshold value Th, the control angle calculator 32 makes the internal division ratio Ke of the estimated actual angle deviation less than 0.5 and makes the internal division ratio Kd of the detected angle deviation greater than 0.5.

In addition, instead of the detected value $\omega$d of the rotational angular velocity, the rotational angular velocity $\omega$c for control may be used.

In a preset velocity-proportional physical quantity range including the velocity threshold value Th, the control angle calculator 32 continuously increases the internal division ratio Ke of the estimated actual angle deviation and continuously decreases the internal division ratio Kd of the detected angle deviation as the detected value $\omega$d of the rotational angular velocity increases.

In the present embodiment, the "preset velocity-proportional physical quantity range including the velocity threshold value Th" corresponds to a range of a rotational angular velocity. In the following description, this range is referred to as a replaced angular velocity range.

A value obtained by subtracting a predetermined value from the velocity threshold value Th is a lower angular velocity limit ThL of the replaced angular velocity range. A value obtained by adding the predetermined value to the velocity threshold value Th is an upper angular velocity limit ThH of the replaced angular velocity range. The replaced angular velocity range ranges from the lower angular velocity limit ThL to the upper angular velocity limit ThH.

In the example shown in FIG. 7, the replaced angular velocity range is set such that the velocity threshold value Th is the center of the replaced angular velocity range.

According to this configuration, the internal division ratios Ke and Kd are continuously changed in the replaced velocity range. Therefore, when there is a difference between the estimated actual angle deviation $\Delta\theta$e and the detected angle deviation $\Delta\theta$d, it is possible to suppress a rapid change in the control angle deviation $\Delta\theta$c and suppress a rapid change in the control rotation angle $\theta$c and a rapid change in the torque. Therefore, it is possible to suppress deterioration in a steering feeling of the driver.

In addition, before and after the velocity threshold value Th, i.e., at a velocity less than or greater than the velocity threshold value Th, the internal division ratios Ke and Kd may be changed stepwise.

The control angle calculator 32 continuously increases the internal division ratio Ke of the estimated actual angle deviation from 0 to 1 and continuously decreases the internal division ratio Kd of the detected angle deviation from 1 to 0 as the detected value $\omega$d of the rotational angular velocity increases in the replaced angular velocity range including the velocity threshold value Th. In other words, when the velocity-proportional physical quantity is less than the preset velocity-proportional physical quantity range including the velocity threshold value, the control angle calculator 32 sets the proportion of the estimated actual angle deviation to 0 and sets the proportion of the detected angle deviation to 1.

Moreover, when the detected value $\omega$d of the rotational angular velocity is less than the replaced angular velocity range, the control angle calculator 32 sets the internal division ratio Ke of the estimated actual angle deviation to 0 and sets the internal division ratio Kd of the detected angle deviation to 1. When the detected value $\omega$d of the rotational angular velocity is greater than the replaced angular velocity range, the control angle calculator 32 sets the internal division ratio Ke of the estimated actual angle deviation to 1 and sets the internal division ratio Kd of the detected angle deviation to 0. In other words, when the velocity-proportional physical quantity is greater than the preset velocity-proportional physical quantity range including the velocity threshold value, the control angle calculator 32 sets the proportion of the estimated actual angle deviation to 1 and sets the proportion of the detected angle deviation to 0.

<Velocity threshold value Th is set in correspondence with area where magnetic flux weakening control is executed>

The velocity threshold value Th is set in correspondence with a rotational angular velocity $\omega$bd of a boundary

between the area where the Id = 0 control or the maximum torque current control is executed and the area where the magnetic flux weakening control is executed. The rotational angular velocity ωbd is an example of the velocity-proportional physical quantity.

The effect of this setting will be described below.

When there is an angle error Δθerr, a torque error ΔTerr can be approximated as follows.

$$\Delta Terr \approx Iq \times \cos(\Delta \theta err) + Id \times \sin(\Delta \theta err) \qquad (1\text{-}9)$$

Even if there is an error, the angle error Δθerr is close to 0. That is, cos(Δθerr) << sin(Δθerr) and a first term on the right-hand side of Eq. (1-9) can be ignored.

Therefore, the torque error ΔTerr increases as the absolute value of the d-axis electric current Id increases.

As described above, in the magnetic flux weakening control, the d-axis electric current command value Ido is increased in the negative direction as compared with the d-axis electric current command value calculated in the Id = 0 control or the maximum torque current control.

For this reason, in the area where the magnetic flux weakening control is executed, when the absolute value of the d-axis electric current Id increases and the angle error Δθerr is present, the torque error ΔTerr increases.

As described above, when the velocity threshold value Th is set, the control angle deviation Δθc is calculated such that the internal division ratio Ke of the estimated actual angle deviation increases and the estimated actual angle deviation Δθe decreases in the area where the magnetic flux weakening control is executed. For this reason, a deviation of the control rotation angle θc from the true value of the rotation angle (the estimated actual angle deviation Δθe) decreases and the angle error Δθerr decreases.

As described using Eqs. (1-6), the true value of the rotation angle is a rotation angle at which the voltage equation is valid. The torque error ΔTerr shown in Eq. (1-9) is also derived based on the voltage equation. For this reason, it is possible to reduce the torque error ΔTerr by calculating the control rotation angle θc such that the estimated actual angle deviation Δθe is reduced.

The accuracy of calculation of the estimated actual angle deviation Δθe of Eqs. (1-6) increases when the induced voltage increases. For this reason, it is possible to increase the accuracy of reduction of the angle error Δθerr by increasing the internal division ratio Ke of the estimated actual angle deviation in an area where the induced voltage in which the magnetic flux weakening control is executed increases.

In the present embodiment, when the detected value ωd of the rotational angular velocity is greater than the lower angular velocity limit ThL of the replaced angular velocity range, the estimated actual angle deviation Δθe is reflected in the calculation of the control rotation angle θc.

Therefore, the velocity threshold value Th and the replaced angular velocity range may be set such that the rotational angular velocity ωbd at the boundary between the area where the Id = 0 control or the maximum torque current control is executed and the area where the magnetic flux weakening control is executed is greater than or equal to the lower angular velocity limit ThL of the replaced angular velocity range. For example, the velocity threshold value Th may be set to coincide with the rotational angular velocity ωbd of the boundary. Alternatively, the velocity threshold value Th and the replaced angular velocity range may be set such that the rotational angular velocity ωbd of the boundary is included in the replaced angular velocity range.

As shown in FIG. 5, when the control device 10 is applied to the embedded magnet type rotating electric machine, the rotational angular velocity ωbd of the boundary changes with the torque. For this reason, the velocity threshold value Th and the replaced angular velocity range may be changed with the torque.

Moreover, when the control device 10 is applied to the embedded magnet type rotating electric machine, the d-axis electric current is a value smaller than 0 even in the maximum torque current control. For this reason, the velocity threshold value Th and the replaced angular velocity range may be set in the area where the maximum torque current control is executed.

In addition, as the velocity-proportional physical quantity, the rotational angular velocity ωc for control may be used. Moreover, a physical quantity other than the rotational angular velocity may be used as the velocity-proportional physical quantity.

For example, the induced voltage generated in the winding is proportional to the rotational angular velocity and the applied voltage of the winding is proportional to the induced voltage.

As the velocity-proportional physical quantity, a sum of magnitudes of voltage vectors of the d-axis voltage command value Vdo and the q-axis voltage command value Vqo or a sum of a square of the voltage command value Vdo and a square of the voltage command value Vqo may be used.

In addition, when the DC voltage Vdc becomes less than the voltage threshold value, the control angle calculator 32 may fix the internal division ratio Ke of the estimated actual angle deviation to 0 and fix the internal division ratio Kd of the detected angle deviation to 1. That is, the control angle calculator 32 may prevent the estimated actual angle deviation Δθe from being reflected in the control angle deviation $\Delta\theta c$.

This is because the base velocity decreases as the DC voltage Vdc decreases and the magnetic flux weakening control is performed from a lower rotational velocity, but the induced voltage is low when the rotor is rotating at a low speed and therefore the accuracy of estimation of the estimated actual angle deviation $\Delta\theta e$ based on Eqs. (1-6) is reduced.

<Calculation of control rotation angle $\theta c$ based on control angle deviation $\Delta\theta c$>

As described above, the control angle calculator 32 calculates the control rotation angle $\theta c$ by performing feedback control such that the control angle deviation $\Delta\theta c$ is close to 0.

In the present embodiment, when feedback control is performed such that the control angle deviation $\Delta\theta c$ is close to 0, the control angle calculator 32 changes the rotational angular velocity $\omega c$ for control, performs an integral of the rotational angular velocity $\omega c$ for control, and calculates the control rotation angle $\theta c$.

According to this configuration, by changing the rotational angular velocity $\omega c$ for control in the feedback control, it is not necessary to directly change the control rotation angle $\theta c$ in the feedback control and it is not necessary to increase the response frequency of the feedback control to the rotation frequency.

Therefore, it is possible to make the response frequency of the feedback control lower than the rotation frequency. Furthermore, the response frequency of the feedback control can be set in accordance with the vibration frequency of the mechanical rotational angular velocity.

For example, as shown in the following equation, the control angle calculator 32 changes the rotational angular velocity $\omega c$ for control in PI control such that the control angle deviation $\Delta\theta c$ is close to 0 and performs feedback control.

$$\omega c = Kc\times(1+1/(Tc\times s))\times\Delta\theta c \qquad (1\text{-}10)$$

Here, Kc denotes a proportional gain. Tc denotes an integral time constant. s denotes a Laplace operator.

Instead of the PI control, various types of feedback control such as PID control may be used.

<Response frequency from $\Delta\theta c$ to $\theta c$>

A transfer function G from the control angle deviation $\Delta\theta c$ to the control rotation angle $\theta c$ is obtained by the following equation.

$$G(s) = \theta c/\Delta\theta c = Kc\times(1+1/(Tc\times s))/s \qquad (1\text{-}11)$$

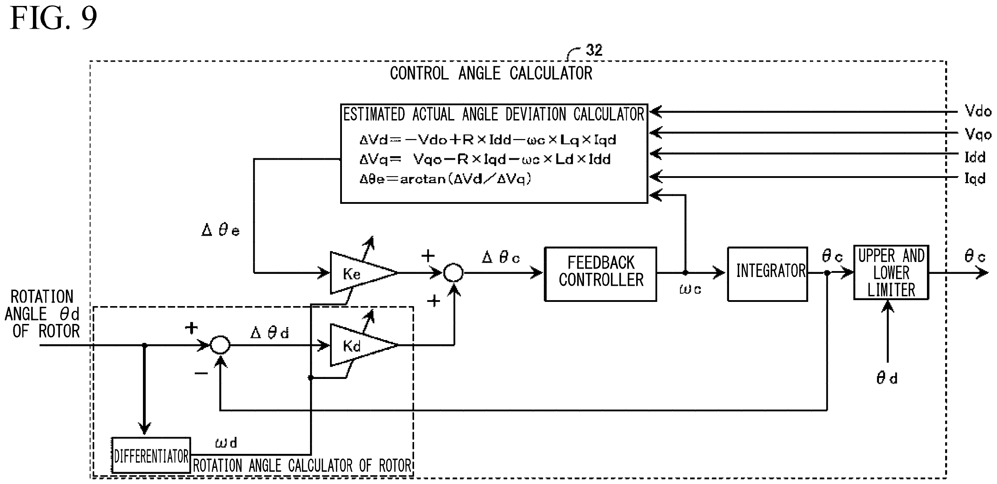

As can be clearly seen from Fig. 9 disclosed in Non-Patent Document 1 (Kurishige et al., A New Control Strategy to Reduce Steering Torque for Vehicles Equipped with Electric Power Steering (Steering Angular Velocity Controller Using the Observer for Specified Frequency), Transactions of the Japan Society of Mechanical Engineers (Series C), Vol. 68, No. 675), the steering speed oscillates at approximately 35 Hz. The reason is that there are approximately 3.5 cycles at 0.1 s as shown in Fig. 9.

Therefore, velocity variations in steering can occur at this degree of frequency. Therefore, a response from the control angle deviation $\Delta\theta c$ to the control rotation angle $\theta c$ is required to be 35 Hz or higher, preferably between 90 and 100 Hz, which are approximately three times 35 Hz with a margin, and more preferably at least 175 Hz, which is approximately five times 35 Hz.

The vibration frequency of this rotational angular velocity corresponds to a resonance frequency of the mechanical power transmission mechanism connected to the rotating axis of the rotor.

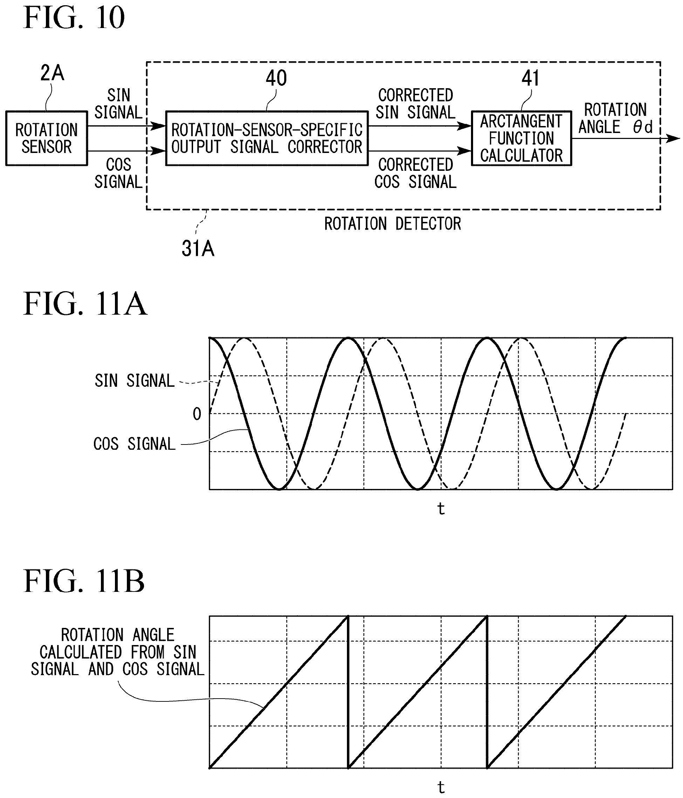

FIG. 11 is a Bode plot diagram showing the transfer function G of Eq. (1-11). In FIG. 11, the horizontal axis represents a rotational angular velocity and the vertical axis represents a gain. Moreover, FIG. 11 shows a case where the condition Tc = 5/Kc is set in Eq. (1-11).

As is clear from FIG. 11, the transfer function G is 0 dB at $\omega$ = Kc [rad/s]. A cutoff frequency is a characteristic of a first-order low-pass filter with a proportional gain Kc [rad/s]. Here, the basis for using the first-order low-pass filter is that -20 dB/dec is obtained near 0 dB.

Therefore, in the response from the control angle deviation $\Delta\theta c$ to the control rotation angle $\theta c$, a response of $\theta c$ is given such that $\Delta\theta c$ = 0 if the input angle frequency $\omega$ is less than or equal to the proportional gain Kc. On the other hand, when the input angular frequency $\omega$ exceeds the proportional gain Kc, $\theta c$ cannot track the variation of $\Delta\theta c$. Therefore, the fact that the response from the control angle deviation $\Delta\theta c$ to the control rotation angle $\theta c$ is required to be 35 Hz or higher indicates that the proportional gain Kc is required to be $2\pi\times35$ [rad/s] or more.

Furthermore, the proportional gain Kc is required to be set between $2\pi\times90$ and $2\pi\times100$ [rad/s] such that the response is set between 90 and 100 Hz, which are approximately three times 35 Hz with a margin. It is necessary to set the proportional gain Kc to $2\pi\times175$ [rad/s] or more such that the response is set to at least 175 Hz, which is five times 35 Hz.

From the above, the proportional gain Kc is required to be at least $2\pi\times35$ [rad/s]. Considering the margin, the proportional gain Kc is required to be between $2\pi\times90$ and $2\pi\times100$ [rad/s], which are approximately three times $2\pi\times35$ [rad/s]. More preferably, the proportional gain Kc may be $2\pi\times175$ [rad/s] or more.

By setting the proportional gain Kc in this way, a response frequency (cut-off frequency) from the control angle deviation $\Delta\theta c$ to the control rotation angle $\theta c$ can be higher than a velocity variation frequency of 35 Hz. Therefore, the control rotation angle $\theta c$ can be adjusted to track the velocity variation and the occurrence of torque variation due to the angle error can be suppressed.

On the other hand, a high-frequency vibration component of the control angle deviation $\Delta\theta c$ due to a noise component included in the electric current detection value or a noise component included in the angle detection value is cut off. For this reason, it is possible to prevent the high-frequency vibration component from being reflected in the control rotation angle $\theta c$.

Therefore, the response frequency from the control angle deviation $\Delta\theta c$ to the control rotation angle $\theta c$ is set between a value that is three times the frequency of the velocity variation and a value that is five times the frequency of the velocity variation (for example, 90 Hz or higher), and therefore it is possible to cause the control rotation angle $\theta c$ to track the velocity variation and it is possible to suppress an influence of a noise component included in the electric current detection value.

As a result, the torque variation can be reduced and the rotating electric machine 1 can be made quiet. That is, the occurrence of vibration or noise of the rotating electric machine 1 can be suppressed.

Moreover, the response frequency from the control angle deviation $\Delta\theta c$ to the control rotation angle $\theta c$ is set to be lower than the rotation frequency corresponding to the velocity threshold value Th.

According to this configuration, in an area where the rotational velocity is higher than the velocity threshold value Th and the internal division ratio Ke of the estimated actual angle deviation $\Delta\theta e$ is higher than the internal division ratio Kd of the detected angle deviation $\Delta\theta d$, the noise component of the rotation frequency included in the electric current detection value or the like can be suppressed from being reflected in the control rotation angle $\theta c$.

Moreover, the response frequency from the control angle deviation $\Delta\theta c$ to the control rotation angle $\theta c$ is set to be higher than the mechanical resonance frequency generated in the rotational velocity of the rotor. In the present embodiment, the mechanical resonance frequency is 35 Hz.

In particular, the response frequency from the control angle deviation $\Delta\theta c$ to the control rotation angle $\theta c$ may be set between a value that is three times the mechanical resonance frequency generated in the rotational velocity of the rotor and a value that is five times the mechanical resonance frequency generated in the rotational velocity of the rotor.

According to this configuration, it is possible to cause the control rotation angle $\theta c$ to track a variation in the mechanical rotational angular velocity and it is possible to suppress an influence of a high-frequency noise component.

On the other hand, in the magnetic flux weakening control disclosed in Patent Document 1, as described above, a feedback controller for calculating $\Delta\omega1c$ requires frequency tracking performance up to the maximum rotational speed. A high-end microcontroller is required to implement such a feedback controller. Furthermore, it is difficult to separate the noise component from an electric current detection value included in $\Delta\theta dc$.

On the other hand, in the present embodiment, the response frequency can be set in accordance with the frequency of the velocity variation lower than the maximum rotation frequency. Therefore, it is not necessary to have frequency tracking performance similar to that of Patent Document 1.

Therefore, according to the present embodiment, it is easy to separate the noise component from the electric current detection value, and a low-grade microcontroller can be used as the CPU 90.

In the above description, when the velocity-proportional physical quantity, which is a physical quantity proportional to the rotational angular velocity of the rotor, is greater than the preset velocity threshold value Th, the control angle calculator 32 makes the proportion Ke of the estimated actual angle deviation $\Delta\theta e$ in the control angle deviation $\Delta\theta c$ higher than the proportion Kd of the detected angle deviation. When the velocity-proportional physical quantity is less than the velocity threshold value Th, the control angle calculator 32 makes the proportion Ke of the estimated actual angle deviation $\Delta\theta e$ in the control angle deviation $\Delta\theta c$ lower than the proportion Kd of the detected angle deviation. The present embodiment is not limited to the above-described control. Regardless of the velocity-proportional physical quantity, which is a physical quantity proportional to the rotational angular velocity of the rotor, Kd = 1 and Ke = 0 may be used continuously.

When Kd = 1 and Ke = 0, the estimated actual angle deviation $\Delta\theta e$ is invalid. For this reason, the estimation angle error calculator may not be included in the control angle calculator. Although voltages (Vdo and Vqo) and electric currents (Idd and Iqd) are input to the control angle calculator in the above-described embodiment, the voltages (Vdo and Vqo) and the electric currents (Idd and Iqd) may not be input to the control angle calculator.

In this case, the control rotation angle $\theta c$ of the rotor is continuously calculated using the detected angle deviation $\Delta\theta d$. Because the response frequency from the detected angle deviation $\Delta\theta d$ to the control rotation angle $\theta c$ is set between a value that is three times the frequency of the velocity variation and a value that is five times the frequency of the velocity variation (for example, 175 Hz or higher), it is possible to cause the control rotation angle θc to track the velocity variation and it is possible to suppress an influence of a noise component included in the electric current detection value.

As a result, even when only the detected angle deviation Δθd is used to calculate the control rotation angle θc of the rotor, the torque variation can be reduced and the rotating electric machine 1 can be made quiet. That is, the occurrence of vibration or noise of the rotating electric machine 1 can be suppressed. Furthermore, a pulsation error in the rotation sensor 2 can be suitably reduced and the output of the forward salient pole motor can be maximized.

Moreover, regardless of the velocity-proportional physical quantity, which is a physical quantity proportional to the rotational angular velocity of the rotor, Kd = 0 and Ke = 1 may be used continuously. When Kd = 0 and Ke = 1, the detected angle deviation Δθd is invalid. For this reason, the rotation angle calculator of the rotor may not be included in the control angle calculator. Although the rotation angle θd of the rotor is input to the control angle calculator in the above-described embodiment, the rotation angle θd may not be input to the control angle calculator.

In this case, the control rotation angle θc of the rotor is continuously calculated using the estimated actual angle deviation Δθe. Similar to the case of Kd = 1 and Ke = 0, because the response frequency from the estimated actual angle deviation Δθe to the control rotation angle θc is set between a value that is three times the frequency of the velocity variation and a value that is five times the frequency of the velocity variation (for example, 175 Hz or higher), it is possible to cause the control rotation angle θc to track the velocity variation and it is possible to suppress an influence of a noise component included in the electric current detection value.

As a result, even if only the estimated actual angle deviation Δθe is used and the control rotation angle θc of the rotor is calculated, the torque variation can be reduced and the rotating electric machine 1 can be made quiet. That is, the occurrence of vibration or noise of the rotating electric machine 1 can be suppressed. Furthermore, a pulsation error in the rotation sensor 2 can be suitably reduced and the output of the forward salient pole motor can be maximized.

Second Embodiment

A rotating electrical machine control device 10 according to a second embodiment will be described with reference to the drawings.

In the second embodiment, portions or parts identical to those of the first embodiment are denoted by the same reference signs and description thereof is omitted or simplified.

A basic configuration of the electric power steering device according to the second embodiment is similar to that of the electric power steering device 100 according to the first embodiment. The second embodiment is different from the first embodiment in that a control rotation angle θc in the control device 10 has an upper limit value and a lower limit value.

FIG. 9 is a block diagram showing a control angle calculator 32.

In the present embodiment, the control angle calculator 32 calculates an upper limit value θcmax and a lower limit value θcmin of a control rotation angle based on a detected value θd of a rotation angle.

When the control rotation angle θc deviates from a range from the upper limit value θcmax to the lower limit value θcmin, the control angle calculator 32 corrects a control rotation angle θc based on the detected value θd of the rotation angle.

For example, the control angle calculator 32 adds or subtracts a preset limited angle width Δθlmt to or from the detected value θd of the rotation angle as shown in the following equation. Therefore, the upper limit value θcmax and the lower limit value θcmin are calculated.

The limited angle width Δθlmt is set, for example, within 90 degrees at an electrical angle.

$$\theta cmax = \theta d + \Delta \theta lmt$$

$$\theta cmin = \theta d - \Delta \theta lmt \qquad (2\text{-}1)$$

Further, as shown in the following equation, the control angle calculator 32 limits the control rotation angle θc according to the upper limit value θcmax and the lower limit value θcmin.

(CASE 1) θc > θcmax

$$\theta c = \theta cmax \qquad (2\text{-}2)$$

(CASE 2) θc < θcmin

$$\theta c = \theta cmin \qquad (2\text{-}3)$$

(CASE 3) $\theta cmin \leq \theta c \leq \theta cmax$

$$\theta c = \theta c \qquad (2\text{-}4)$$

Thus, by limiting the control rotation angle $\theta c$ according to the upper limit value $\theta cmax$ and the lower limit value $\theta cmin$ set based on the detected value $\theta d$ of the rotation angle, even if an abnormality occurs in the calculated value of the control rotation angle $\theta c$, the control rotation angle $\theta c$ can be maintained within an appropriate range and the performance of the rotating electric machine can be prevented from being significantly deteriorated.

In addition, the present embodiment can also be used when rotation sensors are multiplexed.

For example, when a double rotation sensor such as a double resolver or a double MR sensor is used, it is only necessary to use the rotation angle detected by the rotation sensor of one normal system as the detected value $\theta d$ of the rotation angle.

Third Embodiment

A rotating electrical machine control device 10 according to a third embodiment will be described with reference to the drawings.

In the third embodiment, portions or parts identical to those of the above-described embodiment are denoted by the same reference signs and description thereof is omitted or simplified.

A basic configuration of an electric power steering device according to the third embodiment is similar to that of the electric power steering device 100 according to the first embodiment. The third embodiment is different from the first embodiment in that a rotation detector includes a rotation-sensor-specific output signal corrector and an arctangent function calculator.

FIG. 10 is a block diagram showing a rotation sensor 2A and a rotation detector 31A according to the third embodiment.

The rotation sensor 2A is a rotation sensor that outputs a SIN signal and a COS signal to the rotation detector 31A. This rotation sensor is, for example, a resolver, an MR sensor, or the like.

The rotation detector 31A includes a rotation-sensor-specific output signal corrector 40 and an arctangent function calculator 41. The rotation-sensor-specific output signal corrector 40 corrects the SIN signal and the COS signal, which are output signals output from the rotation sensor 2A. The rotation-sensor-specific output signal corrector 40 outputs the corrected SIN signal and the corrected COS signal to the arctangent function calculator 41. The arctangent function calculator 41 performs a calculation process for the corrected SIN signal and the corrected COS signal and calculates a rotation angle. Therefore, the rotation detector 31A calculates the rotation angle after suppressing an AC error component of the rotation angle.

The error of the AC component included in the rotation angle becomes a torque pulsation error. The torque pulsation error is a cause of vibration or noise occurring in the rotating electric machine.

In particular, if the rotation angle exceeds an error when a d-axis electric current is applied in magnetic flux weakening control or the like, a d axis of the control rotation angle has a q-axis component of the rotating electric machine, such that a q-axis electric current error occurs.

For this reason, an error of the AC component included in the rotation angle becomes an error of the AC component of the q-axis electric current and vibration or noise of the rotating electric machine occurs. For this reason, it is important to suppress the error of the AC component included in the rotation angle such that the vibration or noise of the rotating electric machine is suppressed.

Next, a calculation process of the rotation detector 31A will be described with reference to FIGS. 11A to 15B.

The horizontal axis of each of FIGS. 11A to 15B represents an elapsed time.

The vertical axis of FIG. 11A represents a SIN signal and a COS signal output from the rotation sensor 2A.

The vertical axis of FIG. 11B represents a rotation angle at which the SIN signal and the COS signal are calculated in an ideal state.

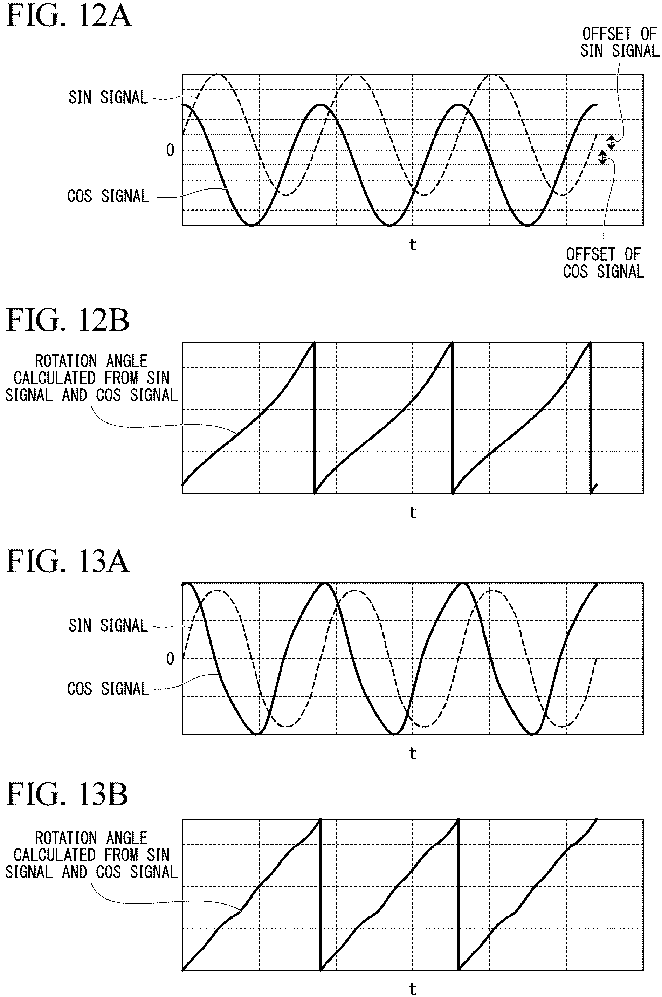

The vertical axis of FIG. 12A represents a case where the COS signal is offset with respect to the SIN signal output from the rotation sensor 2A.

The vertical axis of FIG. 12B represents a rotation angle at which the SIN signal and the COS signal shown in FIG. 12A are calculated.

The vertical axis of FIG. 13A represents a case where a harmonic component of the SIN signal output from the rotation sensor 2A and a harmonic component of the COS signal are superimposed.

The vertical axis of FIG. 13B represents a rotation angle at which the SIN signal and the COS signal shown in FIG.

13A are calculated.

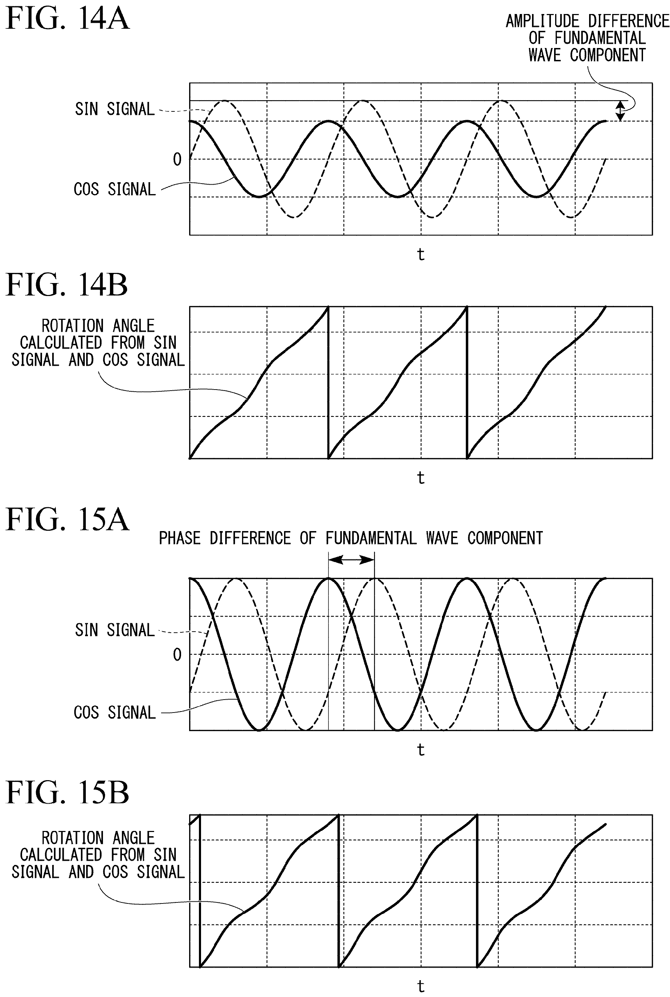

The vertical axis of FIG. 14A represents a case where there is an amplitude difference between a harmonic component of the SIN signal output from the rotation sensor 2A and a fundamental wave component in the COS signal.

The vertical axis of FIG. 14B represents a rotation angle at which the SIN signal and the COS signal shown in FIG. 14A are calculated.

The vertical axis of FIG. 15A indicates a case where a phase difference between the harmonic component of the SIN signal output from the rotation sensor 2A and the fundamental wave component in the COS signal deviates from 90 degrees.

The vertical axis of FIG. 15B represents a rotation angle at which the SIN signal and the COS signal shown in FIG. 15A are calculated.

In all cases other than a case where the SIN and COS signals shown in FIGS. 11A and 11B are in an ideal state, i.e., in the cases shown in FIGS. 12B, 13B, 14B, and 15B, the rotation angle includes an error that occurs periodically. This error can be a factor in the occurrence of a torque pulsation error.

Hereinafter, a process of the rotation-sensor-specific output signal corrector 40 for suppressing the above-described error will be described. In the present embodiment, a case where the rotation-sensor-specific output signal corrector 40 performs all of the following four calculation processes will be described.

<First calculation process>

The rotation-sensor-specific output signal corrector 40 calculates offset values of the SIN signal and the COS signal. The offset values are subtracted from the SIN signal and the COS signal.

In relation to a process of calculating the offset values, the calculation process may be performed using a low-pass filter having a cutoff frequency sufficiently lower than the frequencies of the fundamental wave component of the SIN signal and the fundamental wave component of the COS signal, the calculation process may be performed according to Fourier series expansion, or the calculation process may be performed in other known methods.

<Second calculation process>

Next, harmonic components of the SIN signal and the COS signal are calculated. The harmonic component of the SIN signal is subtracted from the SIN signal. The harmonic component of the COS signal is subtracted from the COS signal. Therefore, harmonic components are removed. In relation to a process of calculating the harmonic component, the calculation process may be performed according to Fourier series expansion or the calculation process may be performed in other known methods. Moreover, a low-pass filter may be used to remove the harmonic component. In this case, the low-pass filter has a cutoff frequency that is sufficiently higher than the frequency of the fundamental wave component of the SIN signal and the frequency of the fundamental wave component of the COS signal and that is lower than a frequency of the harmonic component.

<Third calculation process>

Next, amplitudes of fundamental wave components of the SIN signal and the COS signal are calculated. The fundamental wave components of the SIN signal and the COS signal are corrected such that they have the same amplitude. In relation to a process of calculating the amplitude of the fundamental wave component, the calculation process may be performed according to Fourier series expansion or the calculation process may be performed in other known methods. In relation to a correction process, it is only necessary to perform a correction process by calculating an amplitude ratio between the fundamental wave components of the SIN signal and the COS signal and multiplying a gain corresponding to the amplitude ratio by either the SIN signal or the COS signal.

<Fourth calculation process>

Next, a correction process is performed such that a phase difference is 90 degrees by calculating the phase difference between the fundamental wave components of the SIN signal and the COS signal. In a process of calculating the phase difference, a calculation process may be performed according to Fourier series expansion or a calculation process may be performed in other known methods. In relation to the correction process, the phase difference may be 90 degrees by delaying either the SIN signal or the COS signal in accordance with the frequency of the fundamental wave component or the phase difference may be corrected such that the phase difference is 90 degrees in another known method.

In the above-described calculation process, a corrected SIN signal and a corrected COS signal are calculated.

The rotation-sensor-specific output signal corrector 40 can perform the above-described four calculation processes. However, it is not necessary to perform all of the four calculation processes in the process of the rotation-sensor-specific output signal corrector 40. It is only necessary to perform at least one of the four calculation processes.

Moreover, when two or three calculation processes selected from the four calculation processes are performed, the order in which the calculation processes are performed is not limited. For example, when only the first calculation process and the second calculation process are performed, the first calculation process may be performed after the second calculation process. Moreover, when only the first calculation process, the second calculation process, and the fourth calculation process are performed, the first calculation process may be performed after the fourth calculation process and the second calculation process may be performed after the first calculation process.

Next, the corrected SIN signal and the corrected COS signal output from the rotation-sensor-specific output signal corrector 40 are input to the arctangent function calculator 41. The arctangent function calculator 41 performs a calculation process for the corrected SIN signal and the corrected COS signal using an arctangent function. Therefore, a rotation angle as shown in FIG. 11B can be obtained. That is, the arctangent function calculator 41 detects a rotation angle based on the corrected SIN signal and the corrected COS signal.

Using the rotation angle obtained in the calculation process of the rotation detector 31A according to the present embodiment, the control rotation angle is calculated in the control methods described in the first and second embodiments. Therefore, the AC error of the rotation angle can be suppressed and the torque pulsation error can be suppressed.

<Modified example 1>

In addition, even if the rotation angle calculated according to the present embodiment is used as the control rotation angle as it is, an effect of sufficiently suppressing the torque pulsation error can be obtained.

<Modified example 2>

The rotation detector 31A may calculate an arctangent function of the SIN signal and the COS signal, which are output signals output from the rotation sensor 2A, perform a correction process based on a harmonic component of the arctangent function, and detect a rotation angle. Even in this case, an effect of sufficiently suppressing the torque pulsation error can be obtained.

As described above, the SIN signal and the COS signal that are output signals output from the rotation sensor 2A are corrected by the rotation-sensor-specific output signal corrector 40 according to the present embodiment, and the rotation angle is calculated by the arctangent function calculator 41, such that a pulsation error in the rotation sensor can be suitably reduced and the output of the forward salient pole motor can be maximized.

Fourth Embodiment

A rotating electrical machine control device 10 according to a fourth embodiment will be described with reference to the drawings.

In the fourth embodiment, portions or parts identical to those of the above-described embodiment are denoted by the same reference signs and description thereof is omitted or simplified.

A basic configuration of an electric power steering device according to the fourth embodiment is similar to that of the electric power steering device 100 according to the first embodiment. The fourth embodiment differs from the first embodiment in that the rotation detector includes an angle calculator and a rotation angle signal corrector.

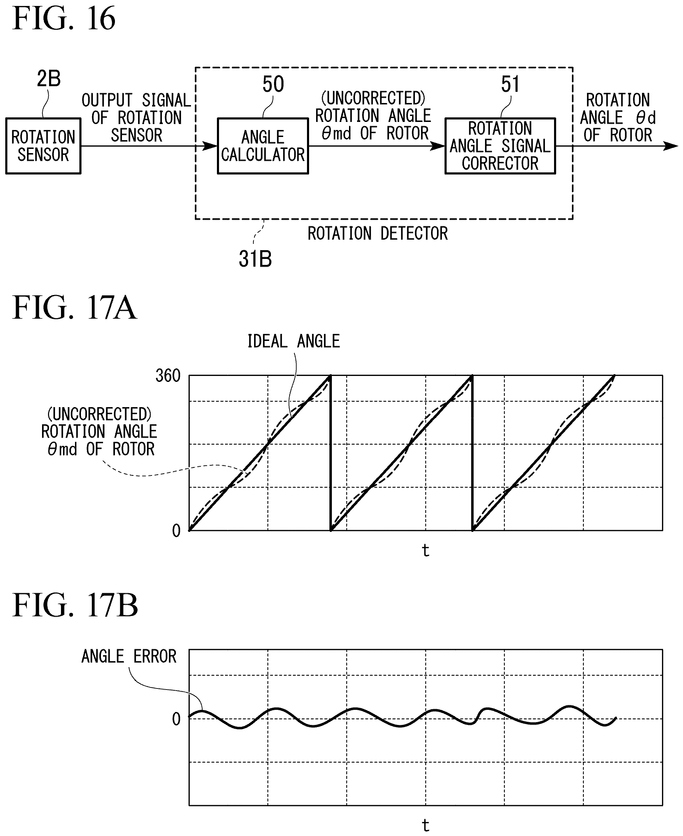

FIG. 16 is a block diagram showing a rotation sensor 2B and a rotation detector 31B according to the fourth embodiment.

As in the first embodiment, the rotation sensor 2B is, for example, a resolver, an encoder, an MR sensor, or the like.

The rotation detector 31B includes an angle calculator 50 and a rotation angle signal corrector 51. The angle calculator 50 outputs an output signal output from the rotation sensor 2B to the angle calculator 50. The angle calculator 50 outputs an uncorrected rotor rotation angle $\theta md$ to the rotation angle signal corrector 51. The rotation angle signal corrector 51 calculates a rotation angle $\theta d$ of the rotor by correcting the rotation angle $\theta md$. Therefore, the rotation angle signal corrector 51 calculates the rotation angle $\theta d$ of the rotor in which an AC error component is suppressed.

The error of the AC component included in the rotation angle is an error of an AC component of torque, i.e., a torque pulsation error. The torque pulsation error is a cause of vibration or noise occurring in the rotating electric machine.

In particular, if the rotation angle exceeds an error when a d-axis electric current is applied in magnetic flux weakening control or the like, a d axis of the control rotation angle has a q-axis component of the rotating electric machine, such that a q-axis electric current error occurs.

For this reason, an error of the AC component included in the rotation angle becomes an error of the AC component of the q-axis electric current and vibration or noise of the rotating electric machine occurs. For this reason, it is important to suppress the error of the AC component included in the rotation angle such that the vibration or noise of the rotating electric machine is suppressed. For this reason, it is important to suppress the error of the AC component included in the rotation angle for suppressing the vibration or noise of the rotating electric machine.

Next, a calculation process of the rotation detector 31B will be described with reference to FIGS. 17A to 18B.

The horizontal axis of each of FIGS. 17A to 18B represents an elapsed time.

The vertical axis of FIG. 17A represents an output signal of the rotation angle. The solid line of FIG. 17A indicates the rotation angle of the rotor in an ideal state. The dotted line in FIG. 17A indicates an uncorrected rotation angle θmd of the rotor.

The vertical axis of FIG. 17B represents an angle error obtained by subtracting the uncorrected rotation angle θmd from the rotation angle of the ideal state.

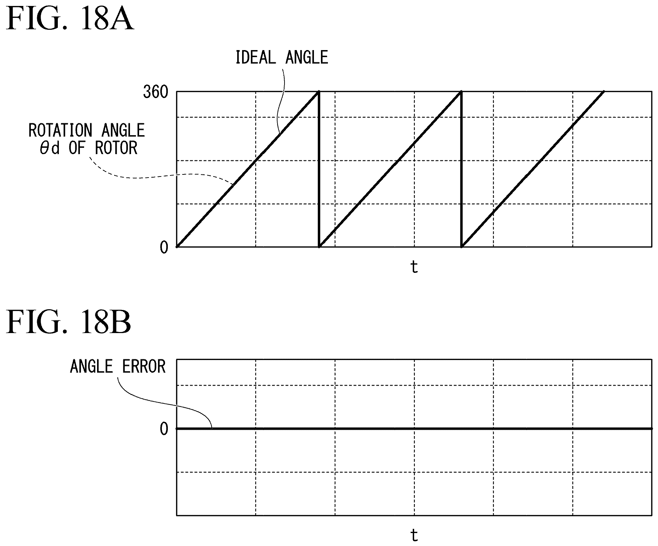

The vertical axis of FIG. 18A represents a rotation angle θd after a process of the rotation angle signal corrector 51 is performed.

The vertical axis of FIG. 18B represents a state in which the angle error has been reduced to zero when a process of the rotation angle signal corrector 51 has been performed.

As shown in FIG. 17B, the angle error occurs with periodic variations. The angle error that occurs periodically can be a factor in the occurrence of a torque pulsation error.

Hereinafter, the process of the rotation angle signal corrector 51 for suppressing the above-described error will be described. Examples of the process of the rotation angle signal corrector 51 include the following two processing methods.

<Processing method 1>

The rotation angle signal corrector 51 holds the angle error between the ideal angle and the uncorrected rotation angle θmd of the rotor in advance with a map or the like. The ideal angle and the uncorrected rotation angle θmd are stored in the storage device 91. Also, the ideal angle and the uncorrected rotation angle θmd may be held in other known methods.

Next, an addition correction process is performed for the uncorrected rotation angle θmd of the rotor with reference to a map holding an angle error corresponding to the actually input uncorrected rotation angle θmd of the rotor. A calculation process may be performed in other known methods.

<Processing method 2>

The rotation angle signal corrector 51 calculates an angle error between the ideal angle and the uncorrected rotation angle θmd of the rotor in advance according to Fourier series expansion. Alternatively, the rotation angle signal corrector 51 may perform a calculation process in other known methods. Therefore, the rotation angle signal corrector 51 extracts an angle error in each order component. Furthermore, the rotation angle signal corrector 51 corrects each order component of the rotation angle θmd such that each order component becomes 0 with respect to the uncorrected rotation angle θmd of the rotor.

When the rotation angle signal corrector 51 performs the above-described processing method, it is possible to obtain the rotation angle θd of the rotor as shown in FIGS. 18A and 18B.

Using the rotation angle obtained in a calculation process of the rotation detector 31B in the present embodiment, the control rotation angle is calculated in the calculation process of the control angle calculator 32 described in the first embodiment. Therefore, the AC error of the rotation angle can be suppressed and the torque pulsation error can be suppressed.

In addition, even if the rotation angle calculated according to the present embodiment is used as the control rotation angle as it is, an effect of sufficiently suppressing the torque pulsation error can be obtained.

From the above, the rotation angle signal corrector 51 of the present embodiment corrects the rotation angle that is the output signal output from the rotation sensor 2B and calculates the rotation angle after correction, such that a pulsation error in the rotation sensor can be suitably reduced and the output of the forward salient pole motor can be maximized.

Fifth Embodiment

A rotating electrical machine control device 10 according to a fifth embodiment will be described with reference to the drawings.

In the fifth embodiment, portions or parts identical to those of the above-described embodiment are denoted by the same reference signs and description thereof is omitted or simplified.

A basic configuration of the electric power steering device according to the fifth embodiment is similar to that of the electric power steering device 100 according to the first embodiment. In terms of a rotating electric machine 1, the fifth embodiment is different from the first embodiment.

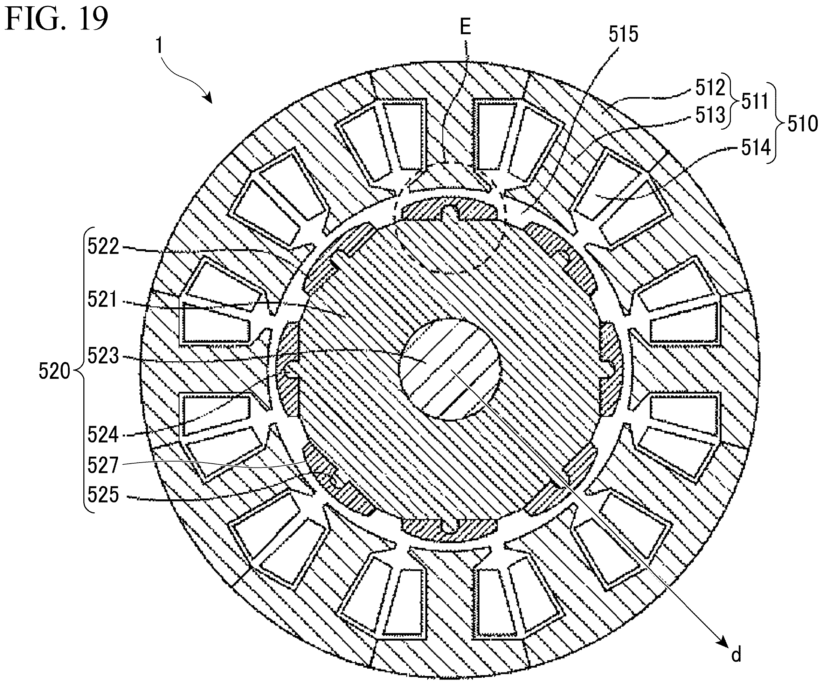

FIG. 19 is a cross-sectional view showing a rotating electric machine to be controlled by a rotating electrical machine control device according to the fifth embodiment and is a view viewed in an axial direction. In other words, FIG. 19 shows a cross-section parallel to axial and perpendicular directions.

In the description of the fifth embodiment, directions are defined as follows.

The term "axial direction" is a direction along the axial center of the rotor constituting the rotating electric machine 1. In other words, the axial direction is a direction in which a shaft constituting the rotor is extended.

The terms "circumferential direction" and "radial direction" correspond to a "circumferential direction" and a "radial direction" in the stator or rotor constituting a permanent magnet synchronous motor, respectively.

The term "circumferential direction" corresponds to a rotation direction of the rotor. In other words, in the cross-sectional view viewed in the axial direction, a circumferential direction around the rotation axis of the rotor is the circumferential direction.

The term "radial direction" is a radial direction of the rotor. For example, the term "radially outward" indicates a direction from the center of the rotor in the radial direction to an outer circumferential portion. The term "radially inward" indicates a direction from the outer circumferential portion of the rotor in the radial direction to the center of the rotor.

As shown in FIG. 19, the rotating electric machine 1 is a permanent magnet synchronous motor. The rotating electric machine 1 has a stator 510 and a rotor 520 rotatably provided with respect to the stator 510.

<Stator 510>

The stator 510 is arranged to surround an outer circumference of the rotor 520 via an air gap 515 that serves as a magnetic gap. The stator 510 has a stator core 511 and a coil 514. The stator core 511 includes a core back 512 formed in a circular shape in the circumferential direction and a plurality of teeth 513 protruding radially inward from the core back 512. The coil 514 is formed by winding windings around each of the plurality of teeth 513. The windings constituting the coil 514 correspond to the above-described windings Cu, Cv, and Cw. In the example shown in FIG. 19, one coil 514 is provided on one tooth 513.

In the configuration shown in FIG. 19, the number of teeth 513 is 12. The number of teeth 513 is not limited to 12 and is appropriately determined according to the design of the permanent magnet synchronous motor.

In the fifth embodiment, when a plurality of core blocks formed in an arc shape are connected in a circular shape, the core back 512 is configured. A structure of the core back 512 is not limited to the structure shown in FIG. 19. When a plurality of core blocks are integrally formed, the core back 512 may be configured. Moreover, the core back 512 and the teeth 513 may be separated.

<Rotor 520>

The rotor 520 includes a rotor core 521, a shaft 523, and a plurality of permanent magnets 522.

The rotor core 521 is made of a magnetic material. The rotor core 521 is configured, for example, by stacking a plurality of electromagnetic steel plates in the axial direction. The electromagnetic steel plate can also be referred to as, for example, a core plate. The shaft 523 is fixed to the rotor core 521 so as to pass through the rotor core 521 in the axial direction. The rotor 520 is rotatably arranged with respect to the stator 510 in the rotating electric machine 1.

The rotor core 521 has a protrusion 524 protruding in the radial direction. The protrusion 524 is formed to protrude radially outward toward the stator 510. The protrusion 524 is provided on an outer circumferential surface of the rotor core 521 on which the permanent magnet 522 is arranged. The number of protrusions 524 is 8 in accordance with the number of permanent magnets 522. It is only necessary for the number of protrusions 524 to be one or more.

<Permanent magnets 522>

A plurality of permanent magnets 522 are arranged on the outer circumferential surface of the rotor core 521 in the circumferential direction. The rotating electric machine 1 including the plurality of permanent magnets 522 is an example of a surface magnet motor (SPM). Each of the plurality of permanent magnets 522 has a stator facing surface 527 and a recess 525. The stator facing surface 527 is formed in an arc shape. The stator facing surface 527 is a surface facing the teeth 513 via the air gap 515. In other words, the stator facing surface 527 faces an inner surface of the stator 510. The recess 525 is fitted with the protrusion 524 of the rotor core 521.

The plurality of permanent magnets 522 are arranged in the circumferential direction of the rotor 520. In the circumferential direction, the polarities of the stator facing surfaces 527 of the two permanent magnets 522 adjacent to each other among the plurality of permanent magnets 522 are different from each other. For example, if the polarity of the stator facing surface 527 of one of the two permanent magnets 522 adjacent in the circumferential direction is an N-pole, the plurality of permanent magnets 522 are arranged in different magnetization directions such that the other stator facing surface 527 is an S-pole.

In the rotating electric machine 1 shown in FIG. 19, the number of teeth 513 is 12, the number of coils 514 is 12, and the number of permanent magnets is 8. That is, FIG. 19 shows a so-called 8-pole/12-slot permanent magnet synchronous motor. The combination of the number of permanent magnets 522, the number of teeth 513, and the number of coils 514 may not be limited to this. Although the number of teeth 513 and the number of coils 514 are the same in the example shown in FIG. 19, the number of teeth 513 and the number of coils 514 may be different.

As described above, the rotating electric machine 1 constituting the permanent magnet synchronous motor shown in FIG. 19 can increase inductance Ld in the d-axis direction shown in FIG. 19 and magnetic flux weakening control can be effectively performed.

When the rotating electrical machine control device 10 according to the first to fourth embodiments controls the drive of the rotating electric machine 1 according to the fifth embodiment, the vibration or noise occurring in the rotating electric machine 1 can be reduced and an effect of implementing high power can be obtained.

Sixth Embodiment

A rotating electrical machine control device 10 according to a sixth embodiment will be described with reference to the drawings.

In the sixth embodiment, portions or parts identical to those of the above-described embodiment are denoted by the same reference signs and description thereof is omitted or simplified.

A basic configuration of an electric power steering device according to the sixth embodiment is similar to that of the electric power steering device 100 according to the first embodiment. The sixth embodiment is different from the first embodiment in that the electric power steering device includes a DC-DC converter.

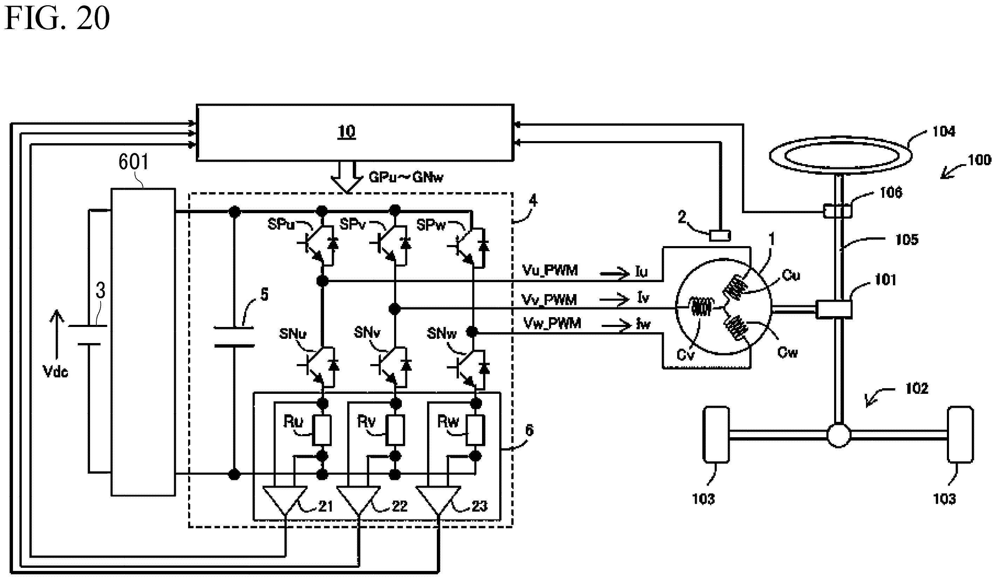

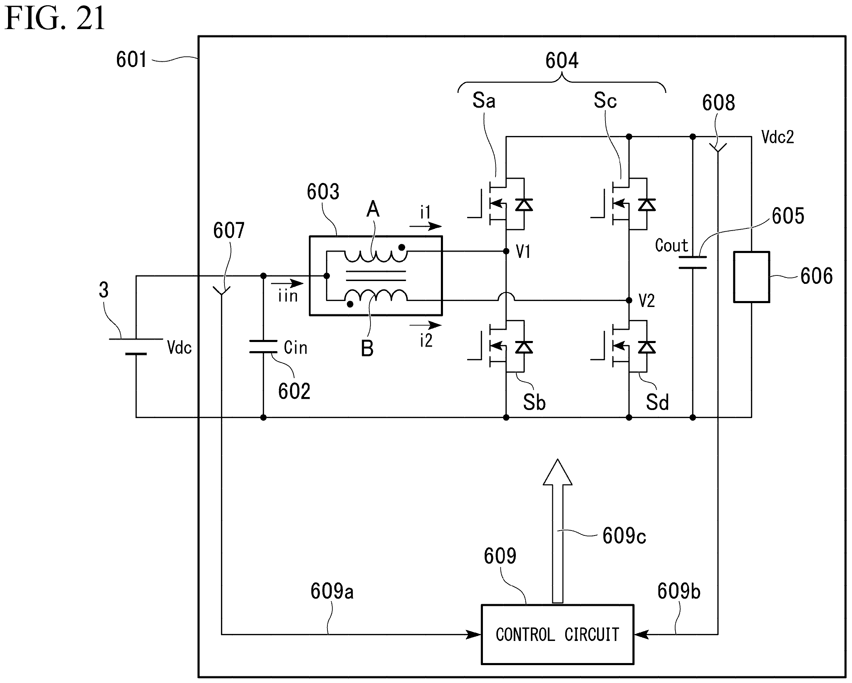

FIG. 20 is a schematic configuration diagram showing an overall configuration of the electric power steering device including the rotating electrical machine control device according to the sixth embodiment. FIG. 21 is a diagram showing a circuit configuration of the DC-DC converter according to the sixth embodiment.

As shown in FIGS. 20 and 21, the electric power steering device includes a DC-DC converter 601. The DC-DC converter 601 is configured to boost a voltage of a DC power supply 3. The DC-DC converter 601 is an example of a voltage booster.

The control device 10 applies an AC voltage to the rotating electric machine 1 based on an output DC voltage boosted by the DC-DC converter 601. A switching controller 35 turns on or off a plurality of switching elements based on a voltage command value and an output DC voltage.

Furthermore, the DC-DC converter 601 has a bridge inverter 604. The bridge inverter 604 is an example of a voltage booster. The bridge inverter 604 has bridge-type switching elements Sa, Sb, Sc, and Sd. The switching elements Sa and Sc constitute an upper arm. The switching elements Sb and Sd constitute a lower arm. The switching elements Sa and Sb are connected in series. The switching elements Sc and Sd are connected in series. The bridge inverter 604 includes a plurality of legs having a series connection structure in which the switching elements are connected in series. The plurality of legs are connected in parallel to each other. Specifically, the switching elements Sa and Sb constitute one leg. The switching elements Sc and Sd constitute one leg. In the example shown in FIG. 21, the DC-DC converter 601 has two legs. In other words, the bridge inverter 604 has a plurality of legs having a structure in which a plurality of switching elements constituting the upper arm and the lower arm are connected in series.

A positive electrode terminal of the DC power supply 3 is connected to one end of an input capacitor 602 and one end of an integrated magnetic part 603. The other end of the integrated magnetic part 603 is connected to an AC terminal of the bridge inverter 604 including switching elements Sa to Sd. A load 606 and one end of a link capacitor 605 are connected to a DC terminal of the bridge inverter 604. A negative electrode terminal of the DC power supply 3 is connected to the input capacitor 602, the other end of the link capacitor 605, a negative electrode of a DC terminal of the bridge inverter 604, and a negative electrode of the load 606.

A control circuit 609 is connected to voltage sensors 607 and 608. Output voltage information 609a output from the voltage sensor 607 is input to the control circuit 609. Output voltage information 609b output from the voltage sensor 608 is input to the control circuit 609. The control circuit 609 generates a drive signal 609c based on the output voltage information 609a and 609b. The control circuit 609 drives the switching elements Sa to Sd constituting the bridge inverter 604 with a drive signal 609c. The control circuit 609 controls the drive of the switching elements Sa to Sb such that the output voltage information 609a and 609b and a target output voltage are equal to each other based on the target output voltage set in the control circuit 609 and the output voltage information 609a and 609b.

In the examples shown in FIGS. 20 and 21, a configuration in which the control device 10 and the control circuit 609 are separate is shown. A configuration in which the control circuit 609 is a part of the control device 10 may be adopted. In this configuration, the above-described calculation process performed in the control circuit 609 is performed in the control device 10. The control circuit 609 generates the drive signal 609c and controls the drive of the switching elements Sa to Sd.

In addition, a dead time is provided such that the upper arm and the lower arm of the switching elements Sa to Sd are not short-circuited and the switching element is turned on or off in a complementary manner.

Here, a relationship of Eq. (6-1) for the voltage and electric current of the integrated magnetic part 603 is valid. In addition, in Eq. (6-1), the winding resistance is ignored.

[Math. 4]

$$\begin{pmatrix} V_{dc} - V_1 \\ V_{dc} - V_2 \end{pmatrix} = \begin{pmatrix} L & -M \\ -M & L \end{pmatrix} \begin{pmatrix} \frac{d}{dt} i_1 \\ \frac{d}{dt} i_2 \end{pmatrix} \qquad (6\text{-}1)$$

Vdc, V1, and V2 shown in Eq. (6-1) correspond to Vdc, V1, and V2 shown in FIG. 21. Specifically, Vdc denotes a voltage of the DC power supply 3. V1 denotes a voltage at a terminal between the switching elements Sa and Sb. V2 denotes a voltage at a terminal between the switching elements Sc and Sd. M shown in Eq. (6-1) denotes mutual inductance between one coil A and the other coil B constituting the integrated magnetic part 603. L shown in Eq. (6-1) denotes self-inductance of the integrated magnetic part 603.

If Eq. (6-1) is changed to the form of the derivative of the electric currents i1 and i2, the following equation can be obtained. [Math. 5]

$$\begin{pmatrix} \frac{d}{dt} i_1 \\ \frac{d}{dt} i_2 \end{pmatrix} = \frac{1}{L \cdot L - M \cdot M} \begin{pmatrix} L & M \\ M & L \end{pmatrix} \begin{pmatrix} V_{dc} - V_1 \\ V_{dc} - V_2 \end{pmatrix} \qquad (6\text{-}2)$$

From Eq. (6-2), the derivative of the electric currents i1 and i2 is as follows.

$$di1/dt = (L\bullet(Vdc-V1)+M\bullet(Vdc-V2))/(L\bullet L-M\bullet M) \qquad (6\text{-}3)$$

$$di2/dt = (L\bullet(Vdc-V2)+M\bullet(Vdc-V1))/(L\bullet L-M\bullet M) \qquad (6\text{-}4)$$

Here, when the switching element Sa is turned on, V1 coincides with Vdc2. When the switching element Sb is turned on, V1 coincides with 0.

Moreover, when the switching element Sc is turned on, V2 coincides with Vdc2. When the switching element Sd is turned on, V2 coincides with 0.

The number of patterns in which the switching elements Sa to Sd are turned on and off is the square of 2, i.e., 4. For this reason, four methods are considered based on Eqs. (6-3) and (6-4).

In the following description, "ON" and "OFF" of reference signs Sa, Sb, Sc, and Sd correspond to "ON" and "OFF" when the switching elements Sa to Sd are turned on and off.

<Mode (1): Sa = ON and Sc = ON>

V1 = Vdc2 and V2 = Vdc2 are obtained. For this reason, the following Eqs. (6-5) and (6-6) are obtained from the above-described Eqs. (6-3) and (6-4).

$$di1/dt = (L\bullet(Vdc-Vdc2)+M\bullet(Vdc-Vdc2))/(L\bullet L-M\bullet M)$$

$$di1/dt = (L+M)\bullet(Vdc-Vdc2)/(L\bullet L-M\bullet M) \qquad (6\text{-}5)$$

$$di2/dt = (L\bullet(Vdc-Vdc2)+M\bullet(Vdc-Vdc2))/(L\bullet L-M\bullet M)$$

$$di2/dt = (L+M)\bullet(Vdc-Vdc2)/(L\bullet L-M\bullet M) \qquad (6\text{-}6)$$

In this mode, given that di1/dt = di2/dt and Vdc < Vdc2, the sign is negative. That is, both the electric currents i1 and i2 decrease.

<Mode (2): Sa = ON and Sd = ON>

V1 = Vdc2 and V2 = 0 are obtained. For this reason, the following Eqs. (6-7) and (6-8) are obtained from the above-described Eqs. (6-3) and (6-4).

$$di1/dt = (L \bullet (Vdc - Vdc2) + M \bullet Vdc)/(L \bullet L - M \bullet M)$$

$$di1/dt = ((L+M) \bullet Vdc - L \bullet Vdc2)/(L \bullet L - M \bullet M) \qquad (6\text{-}7)$$

$$di2/dt = (L \bullet Vdc + M \bullet (Vdc - Vdc2))/(L \bullet L - M \bullet M)$$

$$di2/dt = ((L+M) \bullet Vd - M \bullet Vdc2)/(L \bullet L - M \bullet M) \qquad (6\text{-}8)$$

When the above-described equations are added together, the following equation is obtained.

$$di1/dt + di2/dt = (2(L+M) \bullet Vdc - (L+M) \bullet Vdc2)/(L \bullet L - M \bullet M) \qquad (6\text{-}9)$$

Here, when Vdc = 0.5 Vdc2, di1/dt < 0 and di2/dt > 0 are obtained because Eq. (6-9) is 0 and L > M.

<Mode (3): Sb = ON and Sc = ON>

V1 = 0 and V2 = Vdc are obtained. For this reason, the following Eqs. (6-10) and (6-11) are obtained from the above-described Eqs. (6-3) and (6-4).

$$di1/dt = (L \bullet Vdc + M \bullet (Vdc - Vdc2))/(L \bullet L - M \bullet M)$$

$$di1/dt = ((L+M) \bullet Vdc - M \bullet Vdc2)/(L \bullet L - M \bullet M) \qquad (6\text{-}10)$$

$$di2/dt = (L \bullet (Vdc - Vdc2) + M \bullet Vdc)/(L \bullet L - M \bullet M)$$

$$di2/dt = ((L+M) \bullet Vdc - L \bullet Vdc2)/(L \bullet L - M \bullet M) \qquad (6\text{-}11)$$

When the above equations are added together, the following equation is obtained.

$$di1/dt + di2/dt = (2(L+M) \bullet Vdc - (L+M) \bullet Vdc2)/(L \bullet L - M \bullet M) \qquad (6\text{-}12)$$

Here, as in mode (2), when Vdc = 0.5 Vdc2, di1/dt > 0 and di2/dt < 0 are obtained because Eq. (6-12) is 0 and L > M.

<Mode (4): Sb = ON and Sd = ON>

V1 = 0 and V2 = 0 are obtained. For this reason, the following Eqs. (6-13) and (6-14) are obtained from the above-described Eqs. (6-3) and (6-4).

$$di1/dt = (L \bullet Vdc + M \bullet (Vdc - Vdc2))/(L \bullet L - M \bullet M)$$

$$di1/dt = ((L+M) \bullet Vdc - M \bullet Vdc2)/(L \bullet L - M \bullet M) \qquad (6\text{-}10)$$

$$di2/dt = (L \bullet Vdc + M \bullet Vdc)/(L \bullet L - M \bullet M)$$

$$di2/dt = (L+M) \bullet Vdc/(L \bullet L - M \bullet M) \qquad (6\text{-}14)$$

In this mode, given that di1/dt = di2/dt and Vdc < Vdc2, the sign is positive. That is, both the electric currents i1 and i2 increase.

It is only necessary to generate a desired value of Vdc2 by combining the above-described modes (1) to (4). However, here, by using modes (2) and (3) at 50%, absolute values of di1/dt and di2/dt are reduced and an electric current of an electric current variation input capacitor Cin is reduced.

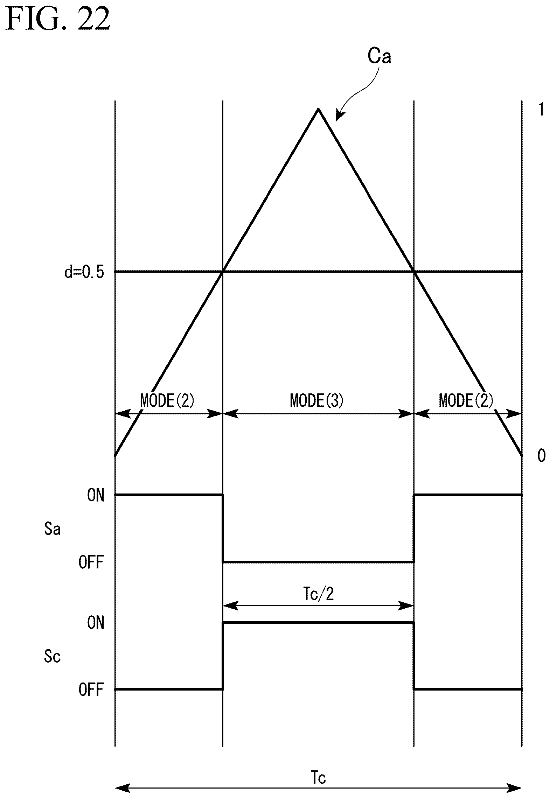

FIG. 22 is a diagram showing a switching operation in a DC-DC converter according to the sixth embodiment. In the example shown in FIG. 22, a case where mode (2) is used for 50% and mode (3) is used for 50% will be described. In FIG. 22, reference sign Ca denotes a carrier wave.

In FIG. 22, if d (= 0.5) > ca, Sa = ON and Sc = OFF. In contrast, if d (0.5) < ca, Sa = OFF and Sc = ON. Because the switching elements Sb and Sd perform complementary switching with the switching elements Sa and Sc, description thereof is omitted.

Thus, when the switching element of each leg, i.e., each switching element of the DC circuit, is operated through a phase shift of 180 degrees, each of modes (2) and (3) is generated by 50% within a cycle Tc. Therefore, the electric current variation and the input-capacitor-specific electric current can be minimized. This is called an interleaved operation.

As described above in the sixth embodiment, in a configuration in which the output from the DC power supply 3 is supplied to the DC-DC converter 601, it is possible to achieve higher power in the rotating electric machine 1 as compared with the first to fifth embodiments.

Furthermore, by performing an interleaved operation, the electric current variation and the input-capacitor-specific electric current can be minimized. It is possible to suppress an increase in a volume of a passive element due to the provision of the DC-DC converter 601.

<Modified example>

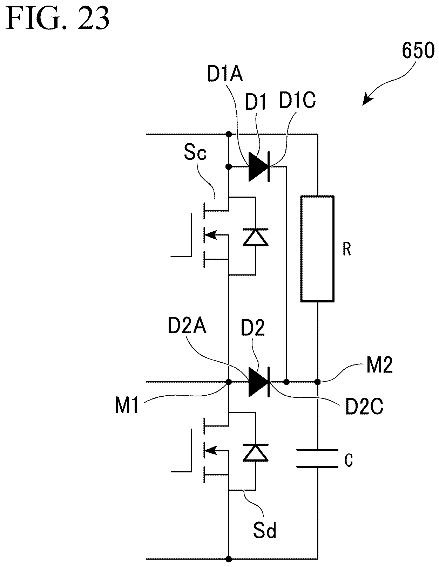

FIG. 23 is a circuit diagram showing a part of the DC-DC converter according to a modified example of the sixth embodiment. In FIG. 23, an overall structure of the DC-DC converter 601 is omitted and the switching elements Sc and Sd are shown. Hereinafter, only differences from FIG. 20 will be described.

A structure in which the switching elements constituting the upper arm and the lower arm are connected in series can be referred to as a leg. As shown in FIG. 23, a resistor and a capacitor may be provided in parallel to each of the plurality of legs. In other words, a snubber circuit 650 in which a resistor R and a capacitor C are connected in series may be connected in parallel to the leg.

Moreover, in the snubber circuit 650, a connection structure using two diodes D1 and D2 may be employed. The diode D1 constituting the snubber circuit 650 is an example of a first diode. The diode D2 constituting the snubber circuit 650 is an example of a second diode.

The diode D1 has an anode D1A connected to a drain terminal of the switching element constituting the upper arm and a cathode D1C connected to an intermediate point M2 between the resistor R and the capacitor C.

The diode D2 has an anode D2A connected to an intermediate point M1 between the upper arm and the lower arm and a cathode D2C connected to the intermediate point M2 between the resistor R and the capacitor C. In other words, the anode D2A of the diode D2 is connected to a drain terminal of the switching element constituting the lower arm and is connected to a source terminal of the switching element constituting the upper arm.

The above-described circuit configuration is applied when the switching element is a metal-oxide-semiconductor field-effect transistor (MOSFET).

The above-described circuit configuration is also applied even if the switching element is a bipolar power transistor. In this case, a drain is replaced with a collector, a source is replaced with an emitter, and a gate is replaced with a base. Moreover, the above-described circuit configuration is also applied when the switching element is an insulated gate bipolar transistor (IGBT). In this case, the drain is replaced with a collector and the source is replaced with an emitter.

Thus, the cathode D1C of the diode D1 and the cathode D2C of the diode D2 are connected to the intermediate point M2 between the resistor R and the capacitor C. According to this configuration, a surge can be suppressed more effectively.

As described above, the DC-DC converter 601 has the snubber circuit 650, and therefore a surge caused by wiring inductance between the DC-DC converter 601 and the electric power converter 4 can be suppressed. Furthermore, EMI countermeasure noise can be reduced, and the cost of the entire device can be reduced. The snubber circuit 650 is also effective when applied to the electric power converter 4.

In the above-described embodiment, driving force sources of various types of devices other than the electric power steering device 100 may be used as a driving force source of the rotating electric machine 1. For example, the rotating electric machine 1 may use a vehicle-wheel driving force source. Moreover, windings having a plurality of phases (for example, two phases or four phases) other than three phases may be provided in the stator.

Moreover, a plurality of sets (for example, two sets) of three-phase windings may be provided in the stator and various portions of the inverter and the control device may be provided in correspondence with each set of three-phase windings.

Although various exemplary embodiments have been described above, the various features, aspects, and functions described in one or more embodiments are not limited to the application of a particular embodiment. The plurality of embodiments described above can be applied alone or in various combinations.

Accordingly, embodiments, which are not shown as examples, are assumed within the scope of the technology disclosed herein.

For example, the present disclosure may include cases where at least one constituent element is modified, added, or omitted and may further include cases where at least one constituent element is extracted and combined with constituent elements of other embodiments.

[Reference Signs List]

1 Rotating electric machine
2, 2A, 2B Rotation sensor
3 DC power supply
4 Electric power converter
5 Smoothing capacitor
6 Electric current sensor
10 Control device (rotating electrical machine control device)
21, 22, 23 Amplifier
31, 31A, 31B Rotation detector (controller)
32 Control angle calculator (controller)
33 Electric current detector (controller)
34 Voltage command value calculator (controller)
35 Switching controller (controller)
36 Electric current command value calculator
40 Rotation-sensor-specific output signal corrector
41 Arctangent function calculator
50 Angle calculator
51 Rotation angle signal corrector
91 Storage device
92 Input circuit
93 Output circuit
100 Electric power steering device
101 Drive force transmission mechanism
102 Steering device
103 Vehicle wheel
104 Steering wheel
105 Shaft
106 Torque sensor
342 Electric current coordinate converter
343 dq-axis voltage command value calculator
344 Voltage coordinate converter
361 d-axis electric current command value generator
362 q-axis electric current command value generator
510 Stator
511 Stator core
512 Core back
513 Teeth
514 Coil
515 Air gap
520 Rotor
521 Rotor core
522 Permanent magnet
523 Shaft
524 Protrusion

525 Recess
527 Stator facing surface
601 DC-DC converter (voltage booster)
602 Input capacitor
603 Integrated magnetic part
604 Bridge inverter
605 Link capacitor
606 Load
607, 608 Voltage sensor
609 Control circuit
609a Output voltage information
609b Output voltage information
609c Drive signal
650 Snubber circuit
C Capacitor
D1, D2 Diode
D1A, D2A Anode
D1C, D2C Cathode
M1, M2 Intermediate point
R, Ru, Rv, Rw Resistor
Sa, Sb, Sc, Sd, SN, SP Switching element

**Claims**

1. A rotating electrical machine control device comprising:

   a rotating electric machine including a stator that includes a plurality of phase windings and a rotor that is arranged in a radial direction of the stator and includes a magnet;
   an electric power converter configured to convert a voltage of a direct current power supply into an alternating current voltage;
   an electric current detector configured to detect electric currents flowing through the plurality of phase windings based on an output signal output from an electric current sensor;
   a rotation sensor configured to output an output signal corresponding to a rotation angle of the rotor;
   a rotation calculator configured to calculate a control rotation angle of the rotor;
   a d-axis electric current command value generator configured to generate a command value of a d-axis electric current flowing through the rotating electric machine wherein a direction of a magnetic flux of the magnet is defined as a d-axis and a direction in which an electrical angle is advanced by 90 degrees as compared with that of the d-axis is defined as a q-axis;
   a q-axis electric current command value generator configured to generate a command value of a q-axis electric current flowing through the rotating electric machine;
   a voltage command value calculator configured to calculate voltage command values to be applied to the plurality of phase windings based on the control rotation angle, the electric current, the command value of the q-axis electric current, and the command value of the d-axis electric current; and
   a switching controller configured to drive a process of turning on or off a plurality of switching elements provided in the electric power converter based on the voltage command value, wherein
   the rotating electric machine has a value of d-axis inductance Ld larger than a value of q-axis inductance Lq, and the rotation calculator reduces an angle error due to a detection error of the rotation sensor based on one or more of the output signal of the rotation sensor, the electric current, and the voltage command value.

2. The rotating electrical machine control device according to claim 1, wherein
   the rotation calculator includes:

   a rotation detector configured to detect the rotation angle of the rotor based on the output signal output from the rotation sensor; and
   a control angle calculator configured to calculate the control rotation angle based on one or more of the rotation angle, the electric current, and the voltage command value.

**EP 4 535 647 A1**

3.  The rotating electrical machine control device according to claim 2, wherein
    the control angle calculator

    calculates a detected angle deviation that is a deviation of the control rotation angle from the rotation angle,
    calculates the detected angle deviation as a control angle deviation, and
    calculates the control rotation angle based on the control angle deviation.

4.  The rotating electrical machine control device according to claim 2, wherein
    the control angle calculator

    estimates an estimated actual angle deviation that is a deviation of the control rotation angle from a true value of the rotation angle of the rotor in accordance with information of an electric current detection value and information of the voltage command value to calculate the estimated actual angle deviation as a control angle deviation, and calculates the control rotation angle based on the control angle deviation.

5.  The rotating electrical machine control device according to claim 2, wherein

    the control angle calculator

    calculates a detected angle deviation that is a deviation of the control rotation angle from the rotation angle, estimates an estimated actual angle deviation that is a deviation of the control rotation angle from a true value of the rotation angle of the rotor in accordance with information of an electric current detection value and information of the voltage command value to calculate a value obtained by internally dividing the estimated actual angle deviation and the detected angle deviation as a control angle deviation, and

    makes a proportion of the estimated actual angle deviation in the control angle deviation higher than a proportion of the detected angle deviation when a velocity-proportional physical quantity, which is a physical quantity proportional to a rotational angular velocity of the rotor, is greater than a preset velocity threshold value, and wherein

    when the velocity-proportional physical quantity is less than the velocity threshold value, the proportion of the estimated actual angle deviation in the control angle deviation is made lower than the proportion of the detected angle deviation.

6.  The rotating electrical machine control device according to claim 5, wherein
    the control angle calculator continuously increases the proportion of the estimated actual angle deviation and continuously decreases the proportion of the detected angle deviation as the velocity-proportional physical quantity increases in a preset velocity-proportional physical quantity range including the velocity threshold value.

7.  The rotating electrical machine control device according to claim 5, wherein

    the control angle calculator continuously increases the proportion of the estimated actual angle deviation from 0 to 1 and continuously decreases the proportion of the detected angle deviation from 1 to 0 as the velocity-proportional physical quantity increases in a preset velocity-proportional physical quantity range including the velocity threshold value,
    when the velocity-proportional physical quantity is less than a range of the velocity-proportional physical quantity, the proportion of the estimated actual angle deviation is set to 0 and the proportion of the detected angle deviation is set to 1, and
    when the velocity-proportional physical quantity is greater than the range of the velocity-proportional physical quantity, the proportion of the estimated actual angle deviation is set to 1 and the proportion of the detected angle deviation is set to 0.

8.  The rotating electrical machine control device according to any one of claims 5 to 7, wherein
    the velocity threshold value is set in correspondence with the velocity-proportional physical quantity of a boundary between an area where d-axis electric current zero control or maximum torque current control is executed and an area where magnetic flux weakening control is executed.

9.  The rotating electrical machine control device according to any one of claims 5 to 8, wherein
    the control angle calculator performs feedback control such that the control angle deviation is close to 0 to change a

29

rotational angular velocity for control in the rotor, perform an integral of the rotational angular velocity for control, and calculate the control rotation angle.

10. The rotating electrical machine control device according to claim 9, wherein

the voltage command value calculator

converts electric current detection values of the plurality of phase windings into a d-axis electric current and a q-axis electric current based on the control rotation angle,
changes a d-axis voltage command value and a q-axis voltage command value such that the d-axis electric current is close to a d-axis electric current command value and the q-axis electric current is close to a q-axis electric current command value, and
converts the d-axis voltage command value and the q-axis voltage command value into a plurality of phase voltage command values based on the control rotation angle, and wherein

the control angle calculator estimates the estimated actual angle deviation that is a deviation of the control rotation angle from a true value of the rotation angle of the rotor based on the d-axis electric current detection value, the q-axis electric current detection value, the d-axis voltage command value, the q-axis voltage command value, and the rotational angular velocity for control.

11. The rotating electrical machine control device according to any one of claims 5 to 10, wherein
the control angle calculator

calculates an upper limit value and a lower limit value of the control rotation angle based on a detected value of the rotation angle, and
corrects the control rotation angle based on the detected value of the rotation angle when the control rotation angle deviates from a range from the upper limit value to the lower limit value.

12. The rotating electrical machine control device according to any one of claims 5 to 11, wherein
a response frequency from the control angle deviation to the control rotation angle is set to be lower than a rotation frequency corresponding to the velocity threshold value.

13. The rotating electrical machine control device according to any one of claims 5 to 12, wherein
a response frequency from the control angle deviation to the control rotation angle is set to be higher than a mechanical resonance frequency occurring in the rotational angular velocity of the rotor.

14. The rotating electrical machine control device according to any one of claims 5 to 13, wherein
a response frequency from the control angle deviation to the control rotation angle is set between a value that is three times a mechanical resonance frequency generated at the rotational angular velocity of the rotor and a value that is five times the mechanical resonance frequency.

15. The rotating electrical machine control device according to any one of claims 2 to 14, wherein
the rotation detector

calculates a corrected SIN signal and a corrected COS signal in at least one calculation process among: a first calculation process of calculating offset values for a SIN signal and a COS signal that are output signals output from the rotation sensor; a second calculation process of calculating harmonic components of the SIN signal and the COS signal; a third calculation process of calculating an amplitude ratio between fundamental wave components of the SIN signal and the COS signal; and a fourth calculation process of calculating phase difference information of the SIN signal and the COS signal, and
detects the rotation angle based on the corrected SIN signal and the corrected COS signal.

16. The rotating electrical machine control device according to any one of claims 2 to 14, wherein
the rotation detector calculates an arctangent function of a SIN signal and a COS signal that are output signals output from the rotation sensor and detects the rotation angle after performing correction based on a harmonic component of the arctangent function.

17. The rotating electrical machine control device according to any one of claims 1 to 16, wherein

the rotor includes:

a rotor core including a magnetic body; and
a plurality of permanent magnets arranged on an outer circumferential surface of the rotor core in a circumferential direction, wherein

a protrusion formed to protrude in a radial direction of the rotor core is provided on the outer circumferential surface of the rotor core on which the permanent magnets are arranged, and
the permanent magnet includes an arc-shaped stator facing surface facing an inner surface of the stator and a recess fitted with the protrusion.

18. The rotating electrical machine control device according to any one of claims 1 to 17, wherein

the electric power converter includes a voltage booster configured to boost the voltage of the DC power supply,
the rotating electrical machine control device applies an AC voltage to the rotating electric machine based on an output DC voltage boosted by the voltage booster, and
the switching controller turns on or off the plurality of switching elements based on the voltage command value and the output DC voltage.

19. The rotating electrical machine control device according to claim 18, wherein

the voltage booster includes:

upper and lower arms each including the switching element; and
a plurality of legs including a structure having switching elements connected in series,

the voltage booster is a bridge-type switching element having the plurality of legs connected in parallel to each other, and
the voltage booster performs an interleaved operation of operating the switching elements constituting the plurality of legs by shifting phases by 180 degrees from each other in a circuit operation of the switching elements.

20. The rotating electrical machine control device according to claim 18 or 19, wherein
the voltage booster includes:

upper and lower arms each including the switching element;
a plurality of legs including a structure having switching elements connected in series, and
a snubber circuit having a resistor and a capacitor connected in series, wherein

the plurality of legs are connected in parallel to each other, and
the snubber circuit is connected in parallel to the plurality of legs.

21. The rotating electrical machine control device according to claim 20, wherein

the snubber circuit includes a first diode and a second diode,
the first diode includes an anode connected to a collector- or drain-side terminal of the switching element constituting the upper arm and a cathode connected to an intermediate point between the resistor and the capacitor, and
the second diode includes an anode connected to an intermediate point between the upper arm and the lower arm and a cathode connected to an intermediate point between the resistor and the capacitor.

FIG. 1

# FIG. 2

FIG. 3

FIG. 4

FIG. 5

# FIG. 6

CONTROL ANGLE CALCULATOR — 32

ESTIMATED ACTUAL ANGLE DEVIATION CALCULATOR

$$\Delta Vd = -Vdo + R \times Idd - \omega c \times Lq \times Iqd$$
$$\Delta Vq = Vqo - R \times Iqd - \omega c \times Ld \times Idd$$
$$\Delta \theta e = \arctan(\Delta Vd / \Delta Vq)$$

Vdo
Vqo
Idd
Iqd

$\Delta \theta e$

Ke

$\Delta \theta c$

FEEDBACK CONTROLLER

$\omega c$

INTEGRATOR

$\theta c$

ROTATION ANGLE $\theta$d OF ROTOR

$\Delta \theta d$

Kd

$\omega d$

DIFFERENTIATOR

ROTATION ANGLE CALCULATOR OF ROTOR

EP 4 535 647 A1

FIG. 7

REPLACED ANGULAR VELOCITY RANGE

Ke

Kd

ThL    Th    ThH    $\omega d$

FIG. 8

GAIN
[dB]

−40dB/dec

−20dB/dec

0    Kc/5    Kc    $\omega$
[rad/s]

# FIG. 9

CONTROL ANGLE CALCULATOR ⌐32

ESTIMATED ACTUAL ANGLE DEVIATION CALCULATOR

$$\Delta Vd = -Vdo + R \times Idd - \omega c \times Lq \times Iqd$$
$$\Delta Vq = Vqo - R \times Iqd - \omega c \times Ld \times Idd$$
$$\Delta \theta e = \arctan(\Delta Vd / \Delta Vq)$$

Vdo
Vqo
Idd
Iqd

$\Delta \theta e$

Ke

$+$ $\Delta \theta c$

FEEDBACK CONTROLLER

$\omega c$

INTEGRATOR $\theta c$

UPPER AND LOWER LIMITER $\theta c$

ROTATION ANGLE $\theta d$ OF ROTOR

$+$ $\Delta \theta d$

$-$

Kd

$+$

$\theta d$

DIFFERENTIATOR $\omega d$

ROTATION ANGLE CALCULATOR OF ROTOR

EP 4 535 647 A1

## FIG. 10

## FIG. 11A

## FIG. 11B

FIG. 12A

OFFSET OF
SIN SIGNAL

SIN SIGNAL

0

COS SIGNAL

t

OFFSET OF
COS SIGNAL

FIG. 12B

ROTATION ANGLE
CALCULATED FROM SIN
SIGNAL AND COS SIGNAL

t

FIG. 13A

SIN SIGNAL

0

COS SIGNAL

t

FIG. 13B

ROTATION ANGLE
CALCULATED FROM SIN
SIGNAL AND COS SIGNAL

t

FIG. 14A

AMPLITUDE DIFFERENCE
OF FUNDAMENTAL
WAVE COMPONENT

SIN SIGNAL

0

COS SIGNAL

t

FIG. 14B

ROTATION ANGLE
CALCULATED FROM SIN
SIGNAL AND COS SIGNAL

t

FIG. 15A

PHASE DIFFERENCE OF FUNDAMENTAL WAVE COMPONENT

SIN SIGNAL

0

COS SIGNAL

t

FIG. 15B

ROTATION ANGLE
CALCULATED FROM SIN
SIGNAL AND COS SIGNAL

t

## FIG. 16

ROTATION SENSOR **2B** → OUTPUT SIGNAL OF ROTATION SENSOR → ANGLE CALCULATOR **50** → (UNCORRECTED) ROTATION ANGLE $\theta$md OF ROTOR → ROTATION ANGLE SIGNAL CORRECTOR **51** → ROTATION ANGLE $\theta$d OF ROTOR

ROTATION DETECTOR **31B**

## FIG. 17A

IDEAL ANGLE

(UNCORRECTED) ROTATION ANGLE $\theta$md OF ROTOR

360

0

t

## FIG. 17B

ANGLE ERROR

0

t

FIG. 18A

IDEAL ANGLE

360

ROTATION ANGLE
$\theta$d OF ROTOR

0

t

FIG. 18B

ANGLE ERROR

0

t

FIG. 19

FIG. 20

# FIG. 21

EP 4 535 647 A1

# FIG. 22

FIG. 23

## INTERNATIONAL SEARCH REPORT

International application No.

**PCT/JP2022/021734**

### A. CLASSIFICATION OF SUBJECT MATTER

*H02P 21/18*(2016.01)i
FI:   H02P21/18

According to International Patent Classification (IPC) or to both national classification and IPC

### B. FIELDS SEARCHED

Minimum documentation searched (classification system followed by classification symbols)

H02P21/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2015-521838 A (NISSAN MOTOR CO., LTD.) 30 July 2015 (2015-07-30) paragraphs [0023]-[0044], fig. 1-3, in particular, paragraph [0029] | 1-4, 17-19 |
| A | | 5-16, 20, 21 |
| Y | JP 2004-266935 A (MITSUBISHI ELECTRIC CORP.) 24 September 2004 (2004-09-24) paragraphs [0011]-[0029], fig. 1 | 1-3, 17-19 |
| A | | 4-16, 20, 21 |
| Y | JP 10-80188 A (MITSUBISHI ELECTRIC CORP.) 24 March 1998 (1998-03-24) paragraphs [0002]-[0008], [0030]-[0048], fig. 1-6, 10-13, in particular, paragraphs [0042]-[0048], fig. 5, 6 | 1-4, 17-19 |
| A | | 5-16, 20, 21 |
| Y | JP 2015-104180 A (DENSO CORP.) 04 June 2015 (2015-06-04) paragraph [0026], fig. 7 | 17-19 |
| Y | JP 2016-146726 A (TOYOTA JIDOSHA KABUSHIKI KAISHA) 12 August 2016 (2016-08-12) paragraphs [0011]-[0022], fig. 1, in particular, paragraphs [0014], [0020], fig. 1 | 18, 19 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 July 2022** | **09 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/021734**

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2006-101675 A (MITSUBISHI ELECTRIC CORP.) 13 April 2006 (2006-04-13) paragraphs [0028]-[0037], fig. 18-23 | 19 |

Form PCT/ISA/210 (second sheet) (January 2015)

# EP 4 535 647 A1

| INTERNATIONAL SEARCH REPORT | | | | International application No. | |
|---|---|---|---|---|---|
| Information on patent family members | | | | PCT/JP2022/021734 | |

| Patent document cited in search report | | | Publication date (day/month/year) | Patent family member(s) | Publication date (day/month/year) |
|---|---|---|---|---|---|
| JP | 2015-521838 | A | 30 July 2015 | US 2015/0340915 A1 paragraphs [0025]-[0046], fig. 1-3, in particular, paragraph [0031] EP 2865079 A1 CN 104412493 A WO 2014/003730 A1 | |
| JP | 2004-266935 | A | 24 September 2004 | US 2005/0104551 A1 paragraphs [0021]-[0039], fig. 1 DE 102004009638 A1 FR 2851858 A1 | |
| JP | 10-80188 | A | 24 March 1998 | US 5796228 A column 1, line 9 to column 2, line 35, column 6, line 16 to column 10, line 5, fig. 1-6, 10-13, in particular, column 8, line 37 to column 10, line 5, fig. 5, 6 CN 1175816 A TW 437152 B KR 10-1998-0024023 A | |
| JP | 2015-104180 | A | 04 June 2015 | US 2015/0145370 A1 paragraph [0038], fig. 7 CN 104659937 A | |
| JP | 2016-146726 | A | 12 August 2016 | (Family: none) | |
| JP | 2006-101675 | A | 13 April 2006 | US 2006/0067655 A1 paragraphs [0118]-[0144], fig. 18-23 DE 102005028945 A1 CN 1756071 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 6987318 B

**Non-patent literature cited in the description**

• **KURISHIGE et al.** A New Control Strategy to Reduce Steering Torque for Vehicles Equipped with Electric Power Steering (Steering Angular Velocity Controller Using the Observer for Specified Frequency). *Transactions of the Japan Society of Mechanical Engineers (Series C)*, vol. 68 (675)